# EUROPÄISCHE PATENTSCHRIFT

(11) **EP 2 313 210 B1**
(45) Veröffentlichungstag und Bekanntmachung des Hinweises auf die Patenterteilung: **16.10.2013**
(21) Anmeldenummer: 09777649.6
(22) Anmeldetag: 05.08.2009
(51) Int. Cl.: B05D 7/00, C08G 18/70, C08G 18/80, C09D 175/14

(54) **ZWEISCHICHT-BESCHICHTUNGSSYSTEME MIT VERBESSERTER ZWISCHENHAFTUNG**
TWO LAYER COATING SYSTEM HAVING IMPROVED INTERCOAT ADHESION
SYSTÈME DE REVÊTEMENT BICOUCHE PRÉSENTANT UNE ADHÉRENCE INTERMÉDIAIRE AMÉLIORÉE

(30) Priorität: 06.08.2008 DE 102008036685
(43) Veröffentlichungstag der Anmeldung: 27.04.2011
(73) Patentinhaber: BASF Coatings GmbH, 48165 Münster (DE)
(72) Erfinder: DORNBUSCH, Michael, 40599 Düsseldorf (DE); SCHLOTTERBECK, Ulf, 68165 Mannheim (DE); STRICKMANN, Frank, 48565 Steinfurt (DE); RAKA, Fatmir, 48149 Münster (DE)
(74) Vertreter: Leifert & Steffan
(86) Internationale Anmeldenummer: PCT/EP2009/005646
(87) Internationale Veröffentlichungsnummer: WO 2010/015386

(56) Entgegenhaltungen:
- EP-A2- 0 288 964
- WO-A1-02/079333
- DE-A1-102005 020 605

## Beschreibung

Die vorliegende Erfindung betrifft Zweischicht-Beschichtungssysteme zur Erzeugung zweischichtiger Beschichtungen aus einem transparenten strahlen- und ggf. thermisch härtbaren Lack und einem pigmentierten Lack, die mindestens ein hydroxyfunktionelles Bindemittel in der Beschichtungszusammensetzung des transparenten Lacks umfassen.

Mehrschichtige Beschichtungen finden vor allem in der Fahrzeuglackierung und der Folienlackierung vielfältige Anwendungen. Bei der Automobillackierung wird dabei in der Regel ein mehrschichtiges Beschichtungssystem aus einem Elektrotauchlack, einem Füller und einem aus einem Basislack und einem Klarlack bestehenden Decklack eingesetzt. Zum Beispiel zur Herstellung von Formteilen einsetzbare mehrschichtige farb- und/oder effektgebende Folien umfassen in der Regel eine Trägerfolie, mindestens einen Basislack und einen Klarlack, die den entsprechenden Lacken der Automobillackierung üblicherweise in ihrer Zusammensetzung entsprechen.

Decklackierungen werden üblicherweise nach dem Naß-in-Naß-Verfahren aufgebracht, bei dem beide Lacke in kurzem Abstand nach Ablüften (Zwischentrocknung) des Basislacks, aber ohne zwischenzeitliche Vernetzung des Basislacks appliziert werden, um dann gemeinsam gehärtet zu werden. Da nach dem Ablüften (Zwischentrocknen) des Basislacks dieser durch den aufgebrachten Klarlack nicht angelöst werden soll, basieren beide Lacke in der Regel auf Lösemitteln mit stark unterschiedlicher Polarität. Üblicherweise werden dabei wässrige Basislacke und nicht-wässrige Klarlacke eingesetzt.

Heutzutage werden zur Verminderung der Lösemittelemission rein strahlenhärtbare Klarlacke und Dual-Cure-Klarlacke (mit aktinischer Strahlung und thermisch härtbare Klarlacke) eingesetzt, die sich insbesondere durch eine niedrige Viskosität bei geringem Lösemittelgehalt der noch nicht gehärteten Beschichtungsmittel auszeichnen und über an sich gute Eigenschaften verfügen.

So werden in der WO 2006/058680 A1 kratzfeste Beschichtungen beschrieben, die strahlungshärtbar und ggf. zusätzlich thermisch härtbar sind und als Deckschichten, insbesondere als oder in Automobilklar- und -decklacken sowie als Beschichtungen von Folien eingesetzt werden. Sie enthalten als Aufbaukomponenten mindestens eine Verbindung mit mindestens einer Isocyanatgruppe, mindestens eine Verbindung enthaltend mindestens ein Siliciumatom und mindestens eine gegenüber Isocyanat reaktive Gruppe sowie mindestens eine Verbindung mit mindestens einer gegenüber Isocyanat reaktiven Gruppe und mindestens einer radikalisch polymerisierbaren Gruppe. Mehrschichtige Beschichtungen, in denen die kratzfeste Beschichtung eingesetzt werden kann, werden dort jedoch nicht beschrieben.

In der DE 10 2005 053 663 A1 werden durch radikalische Polymerisation härtbare, wässrige, strukturviskose Pulverdispersionen beschrieben, die als disperse Phase Partikel mit einer mittleren Partikelgröße von 80 bis 750 nm aufweisen, wobei die Partikel mindestens ein radikalisch vernetzbares Bindemittel mit einer Glasübergangstemperatur von -70 bis + 50°C, einem Gehalt an olefinisch ungesättigten Doppelbindungen von 2 bis 10 equ./kg und einem Gehalt an Säuregruppen von 0,05 bis 15 equ./kg in einer Menge von, bezogen auf die Partikel, 50 bis 100 Gew.-% aufweisen. Die Pulverdispersionen sind insbesondere als Klarlacke einsetzbar. Spezielle mehrschichtige Beschichtungen, in denen die durch radikalische Polymerisation härtbaren, wässrigen, strukturviskosen Pulverdispersionen eingesetzt werden können, werden jedoch nicht beschrieben.

WO 2006/067003 A1 beschreibt Mehrkomponentensysteme enthaltend (A) mindestens eine Komponente, die isocyanatreaktive funktionelle Gruppen enthält, frei von Isocyanatgruppen ist und funktionelle Gruppen mit Bindungen, die mit aktinischer Strahlung aktivierbar sind, enthält oder frei von diesen funktionellen Gruppen ist. Weiterhin enthalten sie (B) mindestens eine Komponente, die Isocyanatgruppen enthält, frei von isocyanatreaktiven funktionellen Gruppen ist und ggf. funktionelle Gruppen mit Bindungen, die mit aktinischer Strahlung aktivierbar sind, mit der Maßgabe, dass mindestens eine der beiden Komponenten (A) oder (B) funktionelle Gruppen mit Bindungen, die mit aktinischer Strahlung aktivierbar sind, enthält. Dabei enthält die Komponente (A) oder mindestens eine der Komponenten (A) mindestens ein Lichtschutzmittel (L) ausgewählt aus der Gruppe bestehend aus niedermolekularen, oligomeren und polymeren Lichtschutzmitteln, die mindestens eine isocyanatreaktive funktionelle Gruppe enthalten, sowie (P) mindestens einen Photoinitiator, der mindestens eine isocyanatreaktive funktionelle Gruppe enthält. Daraus hergestellte Dual-Cure-härtbare Gemische eignen sich zur Herstellung von Folien und Formteilen sowie als Beschichtungsstoffe, insbesondere für Klarlackierungen von Mehrschichtlackierungen. Die dabei einsetzbaren Basislackierungen werden nicht näher beschrieben.

In DE 10 2005 049 520 A1 wird ein Verfahren zur Herstellung von Formteilen aus beschichteten Folien sowie daraus hergestellte Formteile beschrieben. Die in der Druckschrift beschriebenen Folien sind sowohl mit einem pigmentierten Beschichtungsmittel (P) und einem vernetzbaren Beschichtungsmittel (K), das eine radikalisch vernetzbare Komponente (KK) enthält und das nach der Endvernetzung eine transparente Beschichtung (KE) ergibt, beschichtet. Die radikalisch vernetzbare Komponente (KK) enthält dabei (i) ein oder mehrere Oligo- und/oder ein oder mehrere Polyurethan(meth)acrylate und (ii) im Mittel mehr als eine ethylenisch ungesättigte Doppelbindung pro Molekül, (iii) ein zahlenmittleres Molekulargewicht von 1.000 bis 10.000 g/mol, (iv) einen Doppelbindungsgehalt von 1,0 bis 5,0 mol Doppel-bindungen pro 1.000 g reaktive Komponente (KK), (v) im Mittel pro Molekül > einen Verzweigungspunkt, (vi) 5- 50 Gew.-%, jeweils bezogen auf das Gewicht der Komponente (KK), cyclische Strukturelemente und (vii) mindestens ein aliphatisches Strukturelement mit mindestens 6 C-Atomen in der Kette, wobei die radikalisch vernetzbare Komponente (KK) Carbamat- und/oder Biuret- und/oder Allophanat- und/oder Harnstoff- und/oder Amidgruppen enthält. Die radikalisch vernetzbare Komponente (KK) kann neben den Polyurethan(meth)acrylaten dabei noch Bestandteile mit anderen funktionellen Gruppen, wie beispielsweise Hydroxyl-, Carboxyl-, Amino- und/oder Thiolgruppen, aufweisen. Weiterhin wird als pigmentiertes Beschichtungsmittel (P) ein lösemittelhaltiges oder wässriges Beschichtungsmittel eingesetzt, das üblicherweise (I) ein oder mehrere Lösemittel und/oder Wasser, (II) ein oder mehrere Bindemittel, bevorzugt ein oder mehrere Polyurethanharze und/oder ein oder mehrere Acrylatharze, und (III) ggf. mindestens ein Vernetzungsmittel, (IV) mindestens ein Pigment sowie (V) ggf. ein oder mehrere übliche Hilfs- und Zusatzstoffe enthält.

In WO 2006/117091 A1 wird ein Verfahren zur Herstellung von zunächst mit einer transparenten Beschichtung und dann mit einer pigmentierten Beschichtung beschichteten Folien, die Folien selbst sowie ihre Verwendung zur Herstellung von Formteilen beschrieben. Die Folie ist dabei von den Beschichtungen abziehbar. Das vernetzbare Beschichtungsmittel (K) enthält eine radikalisch vernetzbare Komponente (KK), die (i) ein oder mehrere Oligo- und/oder ein oder mehrere Polyurethan-(meth)acrylate enthält und die (ii) ein zahlenmittleres Molekulargewicht von 1.000 bis 50.000 g/mol und (iii) einen Doppelbindungsgehalt von 1,0 bis 5,0 mol Doppelbindungen pro 1.000 g reaktive Komponente (KK) aufweist, wobei die radikalisch vernetzbare Komponente (KK) (iv) im Mittel pro Molekül > 1 Verzweigungspunkt, (v) 5 - 50 Gew. -%, jeweils bezogen auf das Gewicht der Komponente (KK), cyclische Strukturelemente und (vi) mindestens ein aliphatisches Strukturelement mit mindestens 6 C-Atomen in der Kette aufweist und (vii) Carbamat- und/oder Biuret- und/oder Allophanat- und/oder Harnstoff- und/oder Amidgruppen enthält. Die Polyurethan(meth)acrylate können dabei noch andere funktionelle Gruppen, wie beispielsweise Hydroxyl-, Carboxyl-, Amino- und/oder Thiolgruppen aufweisen. Als Bindemittel der pigmentierten Beschichtung sind dabei die in Basislacken im Bereich der Automobilindustrie üblicherweise eingesetzten Polyurethanharze und Acrylatharze geeignet. Weiterhin können die pigmentierten Beschichtungsmittel noch mindestens ein Aminoplastharz als Vernetzungsmittel enthalten.

An das Erscheinungsbild von mehrschichtigen Lacken werden jedoch vielfältige Anforderungen gestellt, die von den bislang bekannten Systemen nur unzureichend erfüllt werden. So erfüllt die Haftung des Klarlacks auf dem Basislack in vielen Fällen nicht nachhaltig die gestellten Anforderungen.

Es ist somit Aufgabe der vorliegenden Erfindung, ein zur Erzeugung mehrschichtiger Beschichtungen einsetzbares Zweischicht-Beschichtungssystem bestehend aus einem transparenten strahlen- und ggf. thermisch härtbaren Lack und einem pigmentierten Lack mit verbesserter Zwischenhaftung der beiden Schichten bereitzustellen, ohne die optischen Eigenschaften ('Appearance') des Zweischichtsystems und dessen Härtbarkeit, insbesondere dessen Strahlenhärtbarkeit, negativ zu beeinflussen. Weiterhin soll, insbesondere im Bereich beschichteter Folien, eine hohe Flexibilität der resultierenden Beschichtungen resultieren.

Die vorgenannten Aufgaben werden gelöst durch ein Zweischicht-Beschichtungssystem, das mindestens ein hydroxyfunktionelles Bindemittel in der Beschichtungszusammensetzung des transparenten Lacks und mindestens ein blockiertes, wasserlösliches oder wasserdispergierbares Isocyanat in der pigmentierten Lack-Zusammensetzung aufweist.

Unter "blockierten Isocyanaten" im Sinne der vorliegenden Erfindung sind dabei Isocyanate zu verstehen, deren Isocyanatgruppen mit anderen Verbindungen (Blockierungsmitteln) reversibel umgesetzt (blockiert) sind. Übliche Blockierungsmittel sind zum Beispiel Caprolactam, Butanonoxim oder Malonsäurediethylester sowie aromatische oder cycloaliphatische Amine, insbesondere Triazol- und Pyrazolderivate, sowie sekundäre Amine. Diese Blockierungsmittel werden erst nach der Applikation beim Härten abgespalten, so dass die freigesetzte Isocyanatgruppe dann zur Reaktion zur Verfügung steht. Besonders bevorzugt handelt es sich bei den "blockierten Isocyanaten" im Sinne der vorliegenden Erfindung um triazol- oder pyrazolderivatblockierte Isocyanate.

Weiterhin ist erforderlich, dass das eingesetzte blockierte Isocyanat wasserlöslich oder wasserdispergierbar ist. Ein blockiertes Isocyanat ist dabei als wasserlöslich anzusehen, wenn es eine Löslichkeit in Wasser von mehr als 10 g/L bei 25°C aufweist. Als wasserdispergierbar ist ein blockiertes Isocyanat anzusehen, wenn es derart in einer wäßrigen Phase dispergiert werden kann, dass es eine in der wäßrigen Phase fein verteilte disperse Phase mit einer maximalen mittleren Teilchengröße von 5 µm ergibt. Die Teilchengröße kann mit dem Fachmann bekannten und geeigneten Methoden, beispielsweise mikroskopisch oder mit der Laserbeugungsmethode bestimmt werden.

Bei dem eingesetzten blockierten Isocyanat im Sinne der Erfindung kann es sich um ein aliphatisches, aromatisches, araliphatisches oder cyclophatisches Isocyanat handeln. Besonders bevorzugt werden aliphatische Isocyanate eingesetzt, um eine hinreichende UV-Stabilität der Beschichtung zu gewährleisten.

Die eingesetzten blockierten Isocyanate können monomerer, oligomerer oder polymerer Natur sein. Eine besonders gute Zwischenhaftung resultiert, wenn das mindestens eine eingesetzte Isocyanat polymerer Natur ist. Ganz besonders bevorzugt weist das eingesetzte Isocyanat eine gemittelte Funktionalität von 2 - 5 blockierten Isocyanatgruppen und eine gemittelte Molmasse von 500 - 20 000 g/mol (Gewichtsmittel) auf.

Die Molmassenbestimmung erfolgt durch Gelpermeationschromatographie gegen Polystyrol als Standard.

Besonders vorteilhaft einzusetzende blockierte Isocyanate sind polymere Isocyanate, die Poly- oder Oligoethylenoxidgruppen zur Verbesserung der Wasserlöslichkeit enthalten und die auf Polymeren oder Oligomeren von HDI (Hexamethylendiisocyanat) oder IPDI (Isophorondiisocyanat) basieren.

Der Anteil der blockierten Isocyanate in der pigmentierten Lackzusammensetzung beträgt vorzugsweise zwischen 15 Gew.-% und 35 Gew.-%, besonders bevorzugt zwischen 20 Gew.% und 30 Gew.-%, bezogen auf den Festkörpergehalt der pigmentierten Lackzusammensetzung.

Besonders bevorzugt werden nicht-kristalline blockierte Isocyanate eingesetzt, die bei Temperaturen von ≤ 150 °C, bevorzugt ≤ 130 °C deblockiert werden können. Abgesehen davon, dass ihr Einsatz eine sehr energiesparende Härtung erlaubt, sind sie besonders gut in pigmentierten Basislack-Zusammensetzungen, die zur Herstellung von beschichteten Folien verwendet werden können, einsetzbar. Unter nichtkristallinen Isocyanaten werden solche Isocyanate verstanden, die ganz oder ganz überwiegend in amorphem oder flüssigem Zustand vorliegen. Bei solchen nichtkristallinen blockierten Isocyanaten handelt es sich vor allem um Oligomere des HDI oder IPDI bzw. Mischungen beider. Bei den Oligomeren kann es sich um Allophanate, Uretdione, Isocyanurate oder andere Isocyanat-Addukte handeln.

Bevorzugt ist das Zweischicht-Beschichtungssystem im Sinne der vorliegenden Erfindung ein System aus einer wässrigen pigmentierten Lack-Zusammensetzung und einer nicht-wässrigen transparenten Lackzusammensetzung. Solche Lackzusammensetzungen bilden nach der Aushärtung als Zweischicht-System z.B. in der Automobilserienlackierung Decklacke mit hoher Beständigkeit gegen Umwelteinflüsse. Als wässrige Lackzusammensetzungen sind dabei solche zu verstehen, deren Lösemittelanteil überwiegend aus Wasser besteht, d.h. dass ein eventueller Anteil an nichtwäßrigen Cosolventien nur so hoch ist, dass der wäßrige Charakter erhalten bleibt, und deren Wassergehalt mehr als 5 Gew.-%, vorzugsweise mehr als 20 Gew.% und insbesondere bevorzugt mehr als 40 Gew.% beträgt. Als nicht-wässrige Lackzusammensetzungen sind dabei solche zu verstehen, deren Wassergehalt nicht mehr als 5 Gew.-% beträgt, bevorzugt nicht mehr als 3 Gew.-% und besonders bevorzugt nicht mehr als 1 Gew.%. Von dem Begriff "nichtwässrige Lackzusammensetzungen" werden dabei gleichermaßen nichtwässrige lösemittelhaltige Lacke und Pulverlacke umfasst.

Bevorzugt werden in den pigmentierten Lack-Zusammensetzungen lösemittelhaltige oder wässrige pigmentierte Beschichtungsmittel (P) eingesetzt, die im Allgemeinen physikalisch oder thermisch und/oder mit aktinischer Strahlung härtbar sind. Diese enthalten bevorzugt (I) ein oder mehrere Lösemittel und/oder Wasser, (II) ein oder mehrere Bindemittel, bevorzugt ein oder mehrere Polyurethanharze und/oder Acrylatharze, (III) ggf. mindestens ein Vernetzungsmittel, (IV) ein oder mehrere Pigmente sowie (V) ggf. ein oder mehrere übliche Hilfs- und Zusatzstoffe und werden beispielsweise in der DE 10 2005 049 520 A1 beschrieben. Mit diesen Beschichtungsmitteln werden dabei optimale Ergebnisse erzielt.

Vorteilhafte Beispiele für (P) sind die üblichen und bekannten, physikalisch und/oder thermisch härtbaren, konventionellen oder wässrigen Basislacke, wie sie beispielsweise aus der WO 03/016095 A1, Seite 10, Zeile 15, bis Seite 14, Zeile 22, oder insbesondere aus der US-A-5,030,514, Spalte 2, Zeile 63, bis Spalte 6, Zeile 68 und Spalte 8, Zeile 53 bis Spalte 9, Zeile 10 sowie EP-B-754 740, Spalte 3, Zeile 37, bis Spalte 6, Zeile 18, bekannt sind.

Ganz besonders bevorzugt werden thermisch härtbare Wasserbasislacke (P) eingesetzt.

Als Bindemittel geeignet sind dabei vor allem die in Basislacken im Bereich der Automobilindustrie üblicherweise eingesetzten Polyurethanharze und Acrylatharze, wobei über die Auswahl der Art und Menge der zur Herstellung dieser Bindemittel eingesetzten Aufbaukomponenten in dem Fachmann bekannter Weise insbesondere die Flexibilität und damit die Eignung der Bindemittel für das erfindungsgemäße Verfahren gesteuert wird. Bezüglich Einzelheiten sei wiederum beispielsweise auf die US-A-5,030,514, Spalte 2, Zeile 63, bis Spalte 6, Zeile 68 und Spalte 8, Zeile 53 bis Spalte 9, Zeile 10 verwiesen.

Darüber hinaus enthalten die pigmentierten Beschichtungsmittel bevorzugt als Vernetzungsmittel noch mindestens ein Aminoplastharz. Geeignet sind prinzipiell die im Bereich der Lackindustrie üblicherweise eingesetzten Aminoplastharze, wobei über die Reaktivität der Aminoplastharze die Eigenschaften der pigmentierten Beschichtungsmittel gesteuert werden können.

Der Gehalt an Bindemittel bzw. ggf. Aminoplastharz in dem pigmentierten Beschichtungsmittel kann dabei breit variiert werden und liegt üblicherweise bei 0 bis 70 Gew.-%, bevorzugt 10 bis 60 Gew.%, Polyurethanharz, 0 bis 70 Gew.-%, bevorzugt 10 bis 60 Gew.%, Acrylatharz und 0 bis 45 Gew.%, bevorzugt 5 bis 40 Gew.%, Aminoplastharz, jeweils bezogen auf die Gesamtmenge an Bindemittel plus Aminoplastharz.

Bezogen auf das Gesamtgewicht des pigmentierten Beschichtungsmittels (P) beträgt der Anteil an Bindemittel plus ggf. Aminoplastharz üblicherweise 10 bis 70, bevorzugt 30 - 60 Gew.-%.

Die pigmentierte Lack-Zusammensetzung enthält außerdem mindestens ein Pigment. Vorzugsweise wird das Pigment aus der Gruppe bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten ausgewählt. Vorzugsweise werden die farb- und/oder effektgebenden Pigmente verwendet. Beispiele geeigneter Effektpigmente, die auch farbgebend sein können, sind Metallplättchenpigmente, wie handelsübliche Aluminiumbronzen, gemäss DE 36 36 183 A1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf die Pigmente in Römpp Lexikon Lacke und Druckfarben, Georg Thieme Verlag, 1998, Seiten 176, "Effektpigmente" und Seiten 380 und 381 "Metalloxid-Glimmer-Pigmente" bis "Metallpigmente" verwiesen.

Geeignete organische und/oder anorganische farbgebende Pigmente sind die in der Lackindustrie üblicherweise eingesetzten Pigmente.

Der Gehalt der Pigmente in der pigmentierten Lack-Zusammensetzung kann sehr breit variieren und richtet sich in erster Linie nach der Tiefe der Farbe und/oder der Intensität des Effekts, die eingestellt werden sollen, sowie nach der Dispergierbarkeit der Pigmente in der pigmentierten Lack-Zusammensetzung. Vorzugsweise liegt der Pigmentgehalt, jeweils bezogen auf das Gesamtgewicht der pigmentierten Lack-Zusammensetzung, bei 0,5 bis 50, bevorzugt 1 bis 30, besonders bevorzugt 2 bis 20 und insbesondere 2,5 bis 10 Gew.-%.

Außer den vorstehend beschriebenen Pigmenten kann die pigmentierte Lack-Zusammensetzung übliche und bekannte Hilfs- und Zusatzstoffe, wie organische und anorganische, transparente und deckende Füllstoffe und Nanopartikel sowie weitere übliche Hilfs- und Zusatzstoffe in üblichen Mengen, bevorzugt 0 bis 40 Gew.-%, bezogen auf das Beschichtungsmittel (P), enthalten.

Die pigmentierte Lackzusammensetzung wird üblicherweise in solchen Menge aufgetragen, dass eine Trockenfilmschichtdicke von mindestens 15 µm, bevorzugt von 20 bis 100 µm, besonders bevorzugt von 20 bis 50 µm, resultiert.

Das erfindungsgemäße Zweischicht-Beschichtungssystem enthält weiterhin eine Zusammensetzung eines transparenten strahlenhärtbaren oder strahlen- und thermisch härtbaren Klarlacks, umfassend mindestens ein hydroxyfunktionelles Bindemittel. Unter einem Klarlack wird gemäß EN ISO 4618:2006 ein Beschichtungsstoff verstanden, der, auf ein Substrat aufgetragen, eine transparente Beschichtung mit schützenden, dekorativen oder spezifischen technischen Eigenschaften bildet. Der transparente Klarlack enthält im allgemeinen keine Pigmente oder Füllstoffe, bestenfalls Farbstoffe oder sehr feinteilige, transparente Pigmente. Der transparente Charakter des Klarlacks bleibt dabei erhalten. Der transparente Klarlack des erfindungsgemäßen Zweischicht-Beschichtungssystems weist ein geringeres Deckvermögen als die pigmentierte Lackzusammensetzung des erfindungsgemäßen Zweischicht-Beschichtungssystems auf.

Das hydroxyfunktionelle Bindemittel in der Zusammensetzung des transparenten Lacks ist vorzugsweise ein übliches oligo- oder polyhydroxyfunktionelles Bindemittel, das weiterhin mindestens eine radikalisch reaktive Gruppe aufweist. Als radikalisch reaktive Gruppen sind in diesem Kontext Gruppen mit Kohlenstoff-Kohlenstoff-Doppel- und -Dreifachbindungen, bevorzugt Vinyl- und (Meth)Acrylgruppen zu verstehen. Die Existenz dieser Gruppen ermöglicht eine Reaktion des hydroxyfunktionellen Bindemittels mit der strahlenhärtbaren Komponente der transparenten Lackzusammensetzung. Bevorzugte Verbindungen für das hydroxyfunktionelle Bindemittel sind hinsichtlich der (Meth)Acrylatgruppen mono-, oligo- oder polyfunktionelle (Meth)Acrylatpolyole, hydroxyfunktionelle Urethanacrylate sowie (meth)acrylierte Polyether- und Polyesterpolyole. Besonders gute Ergebnisse werden mit Pentaerythritoltriacrylat und Dipentaerythritolhydroxypentaacrylat erreicht. Auch mit hydroxyfunktionellen Urethanacrylaten werden besonders gute Ergebnisse erreicht.

Das hydroxyfunktionelle Bindemittel verfügt vorzugsweise über eine Hydroxylzahl (OHZ) von 50 bis 150. Die Hydroxylzahl wird bestimmt, indem eine Probe des hydroxyfunktionellen Bindemittels mit Essigsäureanhydrid-Pyridin gekocht und die entstehende Säure mit Kaliumhydroxidlösung titriert wird. Die Hydroxylzahl gibt an, wieviel Milligramm Kaliumhydroxid der Essigsäure-Menge äquivalent sind, die von 1 g des hydroxyfunktionellen Bindemittels bei der Acetylierung gebunden wird.

Weiterhin verfügt das hydroxyfunktionelle Bindemittel vorzugsweise über eine Funktionalität von 4,0 bis 11,0 mol pro 1000 g hinsichtlich der radikalisch reaktiven Gruppe.

Bevorzugt beträgt das gewichtsmittlere Molekulargewicht des hydroxyfunktionellen Bindemittels 300 - 2000 g/mol. Die Molmassenbestimmung erfolgt durch Gelpermeationschromatographie gegen Polystyrol als Standard.

Der Anteil des hydroxyfunktionellen Bindemittels in der transparenten Lackzusammensetzung beträgt vorzugsweise 1,5 bis 10 Gew.-%, bezogen auf den Festkörperanteil der transparenten Lackzusammensetzung. Innerhalb dieser Bereiche werden optimale Ergebnisse erzielt.

Die transparente Lackzusammensetzung ist weiterhin vorzugsweise eine nicht-wässrige Lackzusammensetzung und umfasst vorzugsweise eine radikalisch vernetzbare Komponente (KK), die ein oder mehrere Oligourethan(meth)acrylate und/oder ein oder mehrere Polyurethan(meth)acrylate enthält.

Hier und im Folgenden wird dabei unter einem Oligomer eine Verbindung verstanden, welche im Allgemeinen im Mittel 2 bis 10 Grundstrukturen oder Monomereinheiten aufweist. Unter einem Polymeren wird dagegen eine Verbindung verstanden, welche im Allgemeinen im Mittel mehr als 10 Grundstrukturen oder Monomereinheiten aufweist. Mischungen bzw. stoffliche Gesamtheiten dieser Art werden von der Fachwelt auch als Bindemittel oder Harze bezeichnet. Im Unterschied dazu ist hier und im Folgenden unter einer niedermolekularen Verbindung eine Verbindung zu verstehen, welche sich im Wesentlichen nur von einer Grundstruktur oder einer Monomereinheit ableitet.

Bevorzugt enthält die radikalisch vernetzbare Komponente (KK) mindestens 50 Gew.-%, besonders bevorzugt mindestens 70 Gew.-% jeweils bezogen auf den Festkörpergehalt der Komponente (KK), eines oder mehrerer Oligourethan(meth)acrylate und/oder eines oder mehrerer Polyurethan(meth)acrylate.

Bevorzugt enthält dabei die radikalisch vernetzbare Komponente (KK) weniger als 5 Gew.-%, bevorzugt weniger als 1 Gew.-%, jeweils bezogen auf das Gewicht der Komponente (KK), und insbesondere im wesentlichen keine nachweisbaren, freien Isocyanatgruppen.

Besonders gute Zweischicht-Beschichtungen resultieren, wenn die radikalisch vernetzbare Komponente (KK), (i) ein oder mehrere Oligo- und/oder ein oder mehrere Polyurethan(meth)acrylate und (ii) im Mittel mehr als 1 ethylenisch ungesättigte Doppelbindung pro Molekül enthält, (iii) ein zahlenmittleres Molekulargewicht von 1.000 bis 10.000 g/mol, (iv) einen Doppelbindungsgehalt von 1,0 bis 5,0 mol Doppelbindungen pro 1.000 g reaktive Komponente (KK), (v) im Mittel pro Molekül > 1 Verzweigungspunkt, (vi) 5- 50 Gew.-%, jeweils bezogen auf das Gewicht der Komponente (KK), cyclische Strukturelemente und (vii) mindestens ein aliphatisches Strukturelement mit mindestens 6 C-Atomen in der Kette aufweist, und weiterhin (viii) Carbamat- und/oder Biuret- und/oder Allophanat- und/oder Harnstoff- und/oder Amidgruppen enthält.

Die im vernetzbaren Beschichtungsmittel (K) enthaltene radikalisch vernetzbare Komponente (KK) kann auch eine Mischung verschiedener Oligo- und/oder Polyurethan(meth)acrylate, die auch unterschiedliche Doppelbindungsgehalte, Molekular-gewichte, Doppelbindungsäquivalentgewichte, Gehalte an Verzweigungspunkten und Gehalte an cyclischen sowie längerkettigen aliphatischen Strukturelementen und unterschiedliche Gehalte an Carbamat-, Biuret-, Allophanat-, Amid- und/oder Harnstoffgruppen aufweisen können, enthalten.

Diese Mischung kann dabei dadurch erhalten werden, dass unterschiedliche Oligo- bzw. Polyurethan(meth)acrylate gemischt werden, oder dass bei der Herstellung eines entsprechenden Oligo- bzw. Polyurethan(meth)acrylates gleichzeitig unterschiedliche Produkte entstehen.

Neben den Urethan(meth)acrylaten kommen als weitere radikalisch vernetzbare Bestandteile der Komponente (KK) Monomere, bevorzugt aber Oligomere und/oder Polymere, insbesondere Polyester(meth)acrylate, Epoxy(meth)acrylate, (meth)acryl-funktionelle (Meth)Acrylcopolymere, Polyether(meth)acrylate, ungesättigte Polyester, Amino(meth)acrylate, Melamin(meth)acrylate und/oder Silikon(meth)acrylate, bevorzugt Polyester(meth)acrylate und/oder Epoxy(meth)acrylate und/oder Polyether-(meth)acrylate, in Betracht. Bevorzugt sind dabei Polymere, die zusätzlich zu den Doppelbindungen noch Hydroxyl-, Carboxyl-, Amino- und/oder Thiol-Gruppen enthalten.

Zur Erzielung einer guten Vernetzung werden bevorzugt radikalisch vernetzbare Komponenten (KK) mit einer hohen Reaktivität der funktionellen Gruppen eingesetzt, besonders bevorzugt radikalisch vernetzbare Komponenten (KK), die als funktionelle Gruppen acrylische Doppelbindungen enthalten.

Die Urethan(meth)acrylate können in dem Fachmann bekannter Weise aus isocyanatgruppenhaltiger Verbindung und mindestens einer Verbindung, die gegenüber Isocyanatgruppen reaktive Gruppen enthält, durch Mischen der Komponenten in beliebiger Reihenfolge, gegebenenfalls bei erhöhter Temperatur, hergestellt werden. Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Insbesondere werden die Urethan(meth)acrylate erhalten, indem das Di- oder Polyisocyanat vorgelegt wird und daraufhin mindestens ein Hydroxyalkyl(meth)acrylat oder Hydroxyalkylester anderer ethylenisch ungesättigter Carbonsäuren zugegeben wird, wodurch zunächst ein Teil der Isocyanatgruppen umgesetzt wird. Nachfolgend wird ein Kettenverlängerungsmittel aus der Gruppe der Diole/Polyole und/oder Diamine/Polyamine und/oder Dithiole/Polythiole und/oder Alkanolamine zugegeben und so die restlichen Isocyanatgruppen mit dem Kettenverlängerungsmittel umgesetzt.

Außerdem ist es möglich, die Urethan(meth)acrylate herzustellen durch Umsetzung eines Di- oder Polyisocyanates mit einem Kettenverlängerungsmittel und anschließende Umsetzung der restlichen freien Isocyanatgruppen mit mindestens einem ethylenisch ungesättigten Hydroxyalkylester.

Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem ethylenisch ungesättigten Hydroxyalkylester und im Anschluss hieran können die restlichen Isocyanatgruppen mit einem Diamin umgesetzt werden.

In der Regel wird die Reaktion bei Temperaturen zwischen 5 und 100 °C, bevorzugt zwischen 20 bis 90 °C und besonders bevorzugt zwischen 40 und 80 °C und insbesondere zwischen 60 und 80 °C durchgeführt.

Bevorzugt wird dabei unter wasserfreien Bedingungen gearbeitet. Wasserfrei bedeutet dabei, dass der Wassergehalt im Reaktionssystem nicht mehr als 5 Gew.-% beträgt, bevorzugt nicht mehr als 3 Gew.-% und besonders bevorzugt nicht mehr als 1 Gew.-% beträgt.

Um eine Polymerisation der polymerisationsfähigen Doppelbindungen zurückzudrängen, wird bevorzugt unter einem sauerstoffhaltigen Gas gearbeitet, besonders bevorzugt Luft oder Luft-Stickstoff-Gemische. Als sauerstoffhaltiges Gas können bevorzugt Luft oder ein Gemisch aus Sauerstoff oder Luft und einem unter den Einsatzbedingungen inerten Gas verwendet werden. Als inertes Gas können Stickstoff, Helium, Argon, Kohlenmonoxid, Kohlendioxid, Wasserdampf, niedere Kohlenwasserstoffe oder deren Gemische verwendet werden. Der Sauerstoffgehalt des sauerstoffhaltigen Gases kann beispielsweise zwischen 0,1 und 22 Vol.-%, bevorzugt von 0,5 bis 20 betragen, besonders bevorzugt 1 bis 15, ganz besonders bevorzugt 2 bis 10 und insbesondere 4 bis 10 Vol.-%. Selbstverständlich können, falls gewünscht, auch höhere Sauerstoffgehalte eingesetzt werden.

Die Reaktion kann auch in Gegenwart eines inerten Solvens durchgeführt werden, z.B. Aceton, Isobutylmethylketon, Methylethylketon, Toluol, Xylol, Butylacetat oder Ethoxyethylacetat.

Durch Auswahl der Art und Menge an eingesetztem Di- und/oder Polyisocyanat, Kettenverlängerungsmittel und Hydroxyalkylester werden dabei die weiteren Kenngrößen der Urethan(meth)acrylate, wie z. B. Doppelbindungsgehalt, Doppelbindungsäquivalentgewicht, Gehalt an Verzweigungspunkten, Gehalt an cyclischen Strukturelementen, Gehalt an aliphatischen Strukturelementen mit mindestens 6 C-Atomen, an Biuret-, Allophanat-, Carbamat-, Harnstoff- bzw. Amidgruppen u. ä. gesteuert.

Durch die Auswahl der jeweils eingesetzten Mengen an Di- oder Polyisocyanat und Kettenverlängerungsmittel sowie durch die Funktionalität des Kettenverlängerungsmittels ist es ferner auch möglich, Urethan(meth)acrylate herzustellen, die neben den ethylenisch ungesättigten Doppelbindungen noch andere funktionelle Gruppen, beispielsweise Hydroxyl-, Carboxylgruppen, Aminogruppen und/oder Thiolgruppen o.ä. enthalten. Bevorzugt enthalten dabei die Urethan(meth)acrylate noch Hydroxyl- und/oder Carboxylgruppen.

Insbesondere, wenn die Urethan(meth)acrylate in wässrigen Beschichtungsmitteln (K) eingesetzt werden sollen, wird ein Teil der in den Reaktionsgemischen vorhandenen freien Isocyanatgruppen noch mit Verbindungen umgesetzt, die eine isocyanatreaktive Gruppe, vorzugsweise ausgewählt aus der Gruppe, bestehend aus Hydroxyl-, Thiol- und primären und sekundären Aminogruppen, insbesondere Hydroxylgruppen, sowie mindestens eine, insbesondere eine, Säuregruppe, vorzugsweise ausgewählt aus der Gruppe bestehend aus Carboxylgruppen, Sulfonsäuregruppen, Phosphorsäuregruppen und Phosphonsäuregruppen, insbesondere Carboxylgruppen, enthalten. Beispiele geeigneter Verbindungen dieser Art sind Hydroxyessigsäure, Hydroxypropionsäure oder Gamma-Hydroxybuttersäure, insbesondere Hydroxyessigsäure.

Die neben den Urethan(meth)acrylaten geeigneten Polyester(meth)acrylate sind dem Fachmann prinzipiell bekannt. Sie sind durch verschiedene Methoden herstellbar. Beispielsweise kann Acrylsäure und/oder Methacrylsäure direkt als Säurekomponente beim Aufbau der Polyester eingesetzt werden. Daneben besteht die Möglichkeit, Hydroxyalkylester der (Meth)Acrylsäure als Alkoholkomponente direkt beim Aufbau der Polyester einzusetzen. Bevorzugt werden die Polyester(meth)-acrylate aber durch Acrylierung von Polyestern hergestellt. Beispielsweise können zunächst hydroxylgruppenhaltige Polyester aufgebaut werden, die dann mit Acryl- oder Methacrylsäure umgesetzt werden. Es können auch zunächst carboxylgruppenhaltige Polyester aufgebaut werden, die dann mit einem Hydroxyalkylester der Acryl- oder Methacrylsäure umgesetzt werden. Nicht umgesetzte (Meth)Acrylsäure kann durch Auswaschen, Destillieren oder bevorzugt durch Umsetzen mit einer äquivalenten Menge einer Mono- oder Diepoxidverbindung unter Verwendung geeigneter Katalysatoren, wie z.B. Triphenylphosphin, aus dem Reaktionsgemisch entfernt werden. Bezüglich weiterer Einzelheiten zur Herstellung der Polyesteracrylate sei insbesondere auf die DE-OS 33 16 593 und die DE-OS 38 36 370 sowie auch auf die EP-A-54 105, die DE-AS 20 03 579 und die EP-B-2866 verwiesen.

Auch die weiterhin geeigneten Polyether(meth)acrylate sind dem Fachmann ebenfalls prinzipiell bekannt. Sie sind durch verschiedene Methoden herstellbar. Beispielsweise können hydroxylgruppenhaltige Polyether, die mit Acrylsäure und/oder Methacrylsäure verestert werden, durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten werden. Einsetzbar sind auch Polymerisationsprodukte des Tetrahydrofurans oder Butylenoxids.

Durch Auswahl der Art und Menge an eingesetzter Alkohol- und Säurekomponente werden dabei die weiteren Kenngrössen der Polyether(meth)acrylate und Polyester-(meth)acrylate, wie z. B. Doppelbindungsgehalt, Doppelbindungsäquivalentgewicht, Gehalt an Verzweigungspunkten, Gehalt an cyclischen Strukturelementen, Gehalt an aliphatischen Strukturelementen mit mindestens 6 C-Atomen u. ä. gesteuert.

Ferner sind auch Epoxy(meth)acrylate dem Fachmann wohl bekannt und brauchen daher nicht näher erläutert zu werden. Sie werden üblicherweise hergestellt durch Anlagerung von Acrylsäure an Epoxidharze, beispielsweise an Epoxidharze auf Basis von Bisphenol A oder andere handelsübliche Epoxidharze.

Es ist ferner erfindungswesentlich, dass die radikalisch vernetzbare Komponente (KK) im Mittel mehr als 1, vorzugsweise mindestens 2 ethylenisch ungesättigte Doppelbindungen pro Molekül aufweist. Besonders bevorzugt weist die radikalisch vernetzbare Komponente (KK) mehr als 2 bis maximal 10,0, insbesondere 3,0 bis 9,5, bevorzugt 3,5 bis 9,0 und ganz besonders bevorzugt 4,0 bis 8,5 Doppelbindungen pro Molekül auf.

Im Allgemeinen enthält die radikalisch vernetzbare Komponente (KK) nicht mehr als 10 Gew.-% an Verbindungen, die nur eine ethylenisch ungesättigte Doppelbindung pro Molekül Gruppe aufweisen, bevorzugt nicht mehr als 7,5 Gew.-%, besonders bevorzugt nicht mehr als 5 Gew.-%, ganz besonders bevorzugt nicht mehr als 2,5 Gew.-%, insbesondere nicht mehr als 1 Gew.-% und speziell 0 Gew.-%.

Mit steigendem Doppelbindungsgehalt pro Molekül der radikalisch vernetzbaren Komponente (KK) steigt dabei im Allgemeinen die Vernetzungsdichte der endvernetzten transparenten Beschichtung (KE). Gleichzeitig nimmt jedoch im Allgemeinen mit steigendem Doppelbindungsgehalt pro Molekül der radikalisch vernetzbaren Komponente (KK) die Reißdehnung der endvernetzten transparenten Beschichtung (KE) ab, d.h. das System wird spröder. Daher weist die endvernetzte transparente Beschichtung (KE) mit steigendem Doppelbindungsgehalt pro Molekül eine erhöhte Tendenz zu Spannungsrissen nach der UV-Härtung auf.

Die Einführung der Doppelbindungen in die Komponente (KK) erfolgt dabei wie oben beschrieben im Allgemeinen durch Umsetzung von einem oder mehreren ethylenisch ungesättigten Hydroxyalkylestern mit den Isocyanatgruppen des Isocyanates bzw. des Isocyanatpräpolymeren im Falle der Urethan(meth)acrylate bzw. mit den Säuregruppen des Polyesters im Falle der Polyester(meth)acrylate. Ebenso können wie oben beschrieben die Ausgangsoligo- bzw. Ausgangspolymere, wie z.B. Polyester, Polyether, Epoxide und Acrylatpolymere, mit Acryl- und/oder Methacrylsäure und/oder einer anderen ethylenisch ungesättigten Säure umgesetzt werden.

Beispiele für geeignete ethylenisch ungesättigte Hydroxyalkylester sind Hydroxyalkylester der Acryl- und Methacrylsäure, der Malein- und Fumarsäure, der Croton- und Isocrotonsäure und der Vinylessigsäure, bevorzugt ethylenisch ungesättigte Hydroxyalkylester der Acrylsäure. Besonders bevorzugt werden die ethylenisch ungesättigten Hydroxyethyl- und/oder Hydroxypropyl- und/oder Hydroxybutyl- und/oder Hydroxypentyl- und/oder Hydroxyhexylester, ganz besonders bevorzugt ethylenisch ungesättigte Hydroxyethylester oder ethylenisch ungesättigte Hydroxyethylester zusammen mit ethylenisch ungesättigten Hydroxybutylestern, der genannten ungesättigten Säuren, insbesondere der Acrylsäure, eingesetzt.

Selbstverständlich können zur Einführung der Doppelbindungen in die Komponente (KK) auch Hydroxyalkylester mit mehr als einer Doppelbindung pro Molekül eingesetzt werden, wie z.B. Pentaerythritdi-, Pentaerythrittri- und Pentaerythrittetraacrylat ö.ä. Ganz besonders bevorzugt wird zur Einführung der Doppelbindungen in die Komponente (KK) 2-Hydroxyethylacrylat und/oder 4-Hydroxybutylacrylat und/oder Pentaerythrittriacrylat eingesetzt.

Dabei hat die zur Einführung der Doppelbindungen eingesetzte Verbindung je nach ihrer Struktur unter Umständen selbst Einfluss auf die Eigenschaften der Beschichtung, da neben dem Doppelbindungsgehalt unter Umständen auch andere Größen, wie z.B. der Urethangruppengehalt, verändert werden. Wird beispielsweise der Doppelbindungsgehalt der Komponente (KK) dadurch erhöht, dass ein Teil des Kettenverlängerungsmittels durch Hydroxyethylacrylat ersetzt wird, so wird der Urethangruppengehalt entsprechend dem Massenverhältnis von Kettenverlängerungsmittel zu Hydroxyethylacrylat verändert. Wird dagegen der Doppelbindungsgehalt der Komponente (KK) beispielsweise dadurch erhöht, dass anstelle von Hydroxyethylacrylat Hydroxyalkylester mit mehr als einer Doppelbindung pro Molekül, wie z.B. Pentaerythrittriacrylat und/oder Pentaerythrittetraacrylat, eingesetzt werden, so wird der Urethangruppengehalt moderat erniedrigt.

Die radikalisch vernetzbare Komponente (KK) verfügt weiterhin vorzugsweise über ein zahlenmittleres Molekulargewicht von 1.000 bis 10.000 g/mol, bevorzugt von 2.000 bis 5.000 g/mol und besonders bevorzugt von 2.500 bis 3.500 g/mol.

Je höher dabei das Molekulargewicht der reaktiven Komponente (KK) ist, desto niedriger ist im Allgemeinen die Vernetzungsdichte der endvernetzten transparenten Beschichtung (KE). Gleichzeitig ist im Allgemeinen die Beständigkeit der noch nicht endvernetzten transparenten Beschichtung (KT) im Allgemeinen umso höher, je höher dabei das Molekulargewicht der reaktiven Komponente (KK) ist.

Vorzugsweise weist die radikalisch vernetzbare Komponente (KK) einen Doppelbindungsgehalt von 1,0 bis 5,0 mol Doppelbindungen pro 1.000 g reaktive Komponente (KK), vorzugsweise einen Doppelbindungsgehalt von 1,5 bis 4,0 mol Doppelbindungen pro 1.000 g reaktive Komponente (KK) und besonders bevorzugt einen Doppelbindungsgehalt von mehr als 2,0 bis 3,5 mol Doppelbindungen pro 1.000 g reaktive Komponente (KK), auf, wobei die Werte jeweils bezogen sind auf das Gewicht der radikalisch vernetzbaren Komponente (KK), aber selbstverständlich ohne nichtreaktive Komponenten, wie z. B. Lösemittel, Wasser oder Additive.

Der Doppelbindungsgehalt der Komponente (KK) hängt dabei - wie dem Fachmann bekannt - neben dem Gehalt an Doppelbindungen pro Molekül insbesondere mit dem zahlenmittleren Molekulargewicht der Komponente (KK) zusammen.

Mit abnehmendem Doppelbindungsgehalt der Komponente (KK) wird die Eigenschaft verbessert, dass die getrocknete, aber noch nicht endvernetzte transparente Beschichtung (KT) nicht mehr fließt und von einer ggf. aufgebrachten Schutzfolie nicht mehr geprägt wird. Gleichzeitig nimmt mit abnehmendem Doppelbindungsgehalt der Komponente (KK) im Allgemeinen die Vernetzungsdichte der endvernetzten transparenten Beschichtung (KE) ab. Wie dem Fachmann bekannt ist, kann dabei das Molekulargewicht und der Doppelbindungsgehalt über Art und Menge der eingesetzten Aufbaukomponenten sowie über die Reaktionsbedingungen eingestellt werden.

Bevorzugt weist die radikalisch vernetzbare Komponente (KK) im Mittel pro Molekül > 1, bevorzugt > 1,4, besonders bevorzugt >2 Verzweigungspunkte auf.

Bei einer Erniedrigung der mittleren Anzahl an Verzweigungspunkten pro Molekül in der Komponente (KK) nimmt im Allgemeinen die Kratzfestigkeit der endvernetzten transparenten Beschichtung (KE) ab. Gleichzeitig nimmt mit Erniedrigung der mittleren Anzahl an Verzweigungspunkten pro Molekül im Allgemeinen die Widerstandsfähigkeit der getrockneten, aber noch nicht endvernetzten transparenten Beschichtung (KT) ab.

Die mittlere Anzahl an Verzweigungspunkten pro Molekül in der Komponente (KK) wird im Allgemeinen durch den Gehalt an für den Aufbau der Komponente (KK) eingesetzten Verbindungen mit einer Funktionalität größer 2, insbesondere mit einer Funktionalität von mindestens 3, eingestellt.

Die Verzweigungspunkte der radikalisch vernetzbaren Komponente (KK) werden bevorzugt über die Verwendung von Isocyanaten mit einer Funktionalität grösser 2, insbesondere mit einer Funktionalität von mindestens 3, eingeführt. Besonders bevorzugt werden die Verzweigungspunkte eingeführt, indem zur Herstellung der in der radikalisch vernetzbaren Komponente (KK) eingesetzten Oligo- und/oder Polyurethan(meth)acrylate trimere und/oder polymere Isocyanate, insbesondere Isocyanurate, und/oder Addukte bzw. Präpolymere mit einer Isocyanatfunktionalität größer 2, insbesondere Allophanate und/oder Biurete, verwendet werden. Ganz besonders bevorzugt werden die Verzweigungspunkte über die Verwendung eines oder mehrerer Isocyanurate und/oder eines oder mehrerer Biurete eingeführt. Es ist aber auch möglich, beim Aufbau der radikalisch vernetzbaren Komponente (KK) Alkohole, Thiole oder Amine mit einer Funktionalität größer als 2 einzusetzen, beispielsweise durch die Verwendung von Pentaerythrit, Dipentaerythrit, Trimethylolethan, Trimethylolpropan, Ditrimethylolpropan und Trishydroxyethylisocyanurat.

Die radikalisch vernetzbare Komponente (KK) weist weiterhin vorteilhafterweise 5-50 Gew.-%, vorzugsweise 10 - 40 Gew.-%, besonders bevorzugt 15 - 30 Gew.-%, jeweils bezogen auf das Gewicht der Komponente (KK) (aber selbstverständlich ohne nichtreaktive Komponenten, wie z. B. Lösemittel, Wasser oder Additive) cyclische Strukturelemente auf.

Mit steigendem Gehalt an cyclischen Strukturelementen der Komponente (KK) wird i.A. die Eigenschaft verbessert, dass die getrocknete, aber noch nicht endvernetzte transparente Beschichtung (KT) nicht mehr fließt und von einer ggf. aufgebrachten Schutzfolie nicht mehr geprägt wird.

Mit steigendem Gehalt an cyclischen Strukturelementen der Komponente (KK) nehmen i.A. auch die Chemikalienbeständigkeit, die Witterungsbeständigkeit sowie die Kratzfestigkeit der endvernetzten transparenten Beschichtung (KE) zu. Weiterhin nimmt mit einem zu hohen Gehalt an cyclischen Strukturelementen der Komponente (KK) die Reißdehnung der endvernetzten Beschichtung (KE) ab und damit die Sprödigkeit zu.

Es ist bevorzugt, dass die radikalisch vernetzbare Komponente (KK) als cyclische Strukturelemente monocyclische Strukturelemente mit 4 bis 8, besonders bevorzugt mit 5 bis 6 Ringgliedern, und/oder polycyclische Strukturelemente mit 7 bis 18 Ringgliedern, besonders bevorzugt di- und/oder tricyclische Strukturelemente mit bevorzugt 10 bis 12, ganz besonders bevorzugt Tricyclodekanringe, aufweist und/oder dass die cyclischen Strukturelemente substituiert sind.

Die cyclischen Struktureinheiten können sowohl cycloaliphatisch, heterocyclisch als auch aromatisch sein, wobei die Struktureinheiten bevorzugt cycloaliphatisch und/oder heterocyclisch sind. Insbesondere wird eine Kombination aus cycloaliphatischen und heterocyclischen Struktureinheiten eingesetzt.

Die heterocyclischen Struktureinheiten können in der Kette sein - wie z. B. bei Verwendung von Uretdionen - und/oder die Verzweigungspunkte bilden - wie z. B. bei Verwendung von Isocyanuraten. Die cycloaliphatischen Struktureinheiten können ebenfalls in der Kette sein - wie z. B. bei Verwendung von cycloaliphatischen Diolen, wie hydriertem Bisphenol-A, zum Aufbau der Urethane - und/oder die Verzweigungspunkte bilden. Besonders bevorzugt bilden die heterocyclischen Struktureinheiten aber die Verzweigungspunkte, während die cycloaliphatischen Struktureinheiten in der Kette sind.

Bevorzugte cycloaliphatische Strukturelemente sind ggf. substituierte Cyclopentanringe, ggf. substituierte Cyclohexanringe, ggf. substituierte Dicycloheptanringe, ggf. substituierte Dicyclooctanringe und/oder ggf. substituierte Dicyclodekanringe und/oder ggf. substituierte Tricyclodekanringe, insbesondere ggf. substituierte Tricyclodekanringe und/oder ggf. substituierte Cyclohexanringe.

Die heterocyclischen Struktureinheiten können sowohl gesättigt, ungesättigt als auch aromatisch sein. Bevorzugt werden gesättigte heterocyclische Struktureinheiten eingesetzt. Die Heteroatome sind bevorzugt ausgewählt aus der Gruppe Stickstoff und/oder Sauerstoff und/oder Schwefel und/oder Phosphor und/oder Silicium und/oder Bor, besonders bevorzugt Stickstoff. Die Anzahl der Heteroatome pro Ring beträgt üblicherweise 1 bis 18, bevorzugt 2 bis 8, und ganz besonders bevorzugt 3. Besonders bevorzugt werden als heterocyclische Struktureinheiten Isocyanuratringe und/oder Uretdione und/oder ggf. substituierte Triazinringe, ganz besonders bevorzugt Isocyanuratringe, eingesetzt.

Zur Einführung der cyclischen Strukturelemente sind prinzipiell auch aromatische Strukturelemente geeignet, wobei bevorzugt der Gehalt an aromatischen Strukturelementen maximal 10 Gew.-%, bevorzugt maximal 5 Gew.-%, und besonders bevorzugt maximal 2 Gew.-%, jeweils bezogen auf das Gewicht der Komponente (KK), beträgt. Aromatische Strukturelemente haben nämlich im Allgemeinen nachteilige Auswirkungen auf die Witterungsbeständigkeit der resultierenden endvernetzten transparenten Beschichtung (KE), so dass der Gehalt an aromatischen Strukturelementen deswegen häufig begrenzt ist.

Die Einführung der cyclischen Strukturelemente in die reaktive Komponente (KK) kann durch Verwendung entsprechender Verbindungen mit cyclischen Strukturelementen zur Herstellung der Komponente (KK) erfolgen. Insbesondere können zur Herstellung der Komponente (KK) Di- und/oder Polyisocyanate mit cyclischen Strukturelementen und/oder Di- bzw. Polyole, Di- bzw. Polyamine, Di- bzw. Polythiole mit cyclischen Strukturelementen eingesetzt werden. Besonders bevorzugt werden Di- und/oder Polyole und/oder Di- und/oder Polyisocyanate mit cyclischen Strukturelementen eingesetzt.

Zur Herstellung der in der radikalisch vernetzbaren Komponente (KK) eingesetzten Oligo- und/oder Polyurethan(meth)acrylate werden daher bevorzugt zumindest anteilig als Isocyanatkomponente Isocyanurate von Di- und/oder Polyisocyanaten, die üblicherweise in der Lackindustrie eingesetzt werden, verwendet. Anstelle oder zusammen mit diesen Isocyanuraten können Präpolymere und/oder Addukte, insbesondere Biurete und/oder Allophanate und/oder Uretdione, von Di- und/oder Polyisocyanaten, die üblicherweise in der Lackindustrie eingesetzt werden, verwendet werden. Besonders bevorzugt werden Isocyanurate und/oder Biurete und/oder Allophanate und/oder Uretdione von aliphatischen und/oder cycloaliphatischen Isocyanaten eingesetzt. Daneben ist es ferner möglich, alleine oder in Kombination mit den oben aufgeführten Isocyanuraten und/oder Biureten und/oder Allophanaten und/oder Uretdionen, cycloaliphatische Di- und/oder Polyisocyanate einzusetzen.

(Cyclo)Aliphatische Di- und/oder Polyisocyanate, die üblicherweise in der Lackindustrie eingesetzt werden, sind beispielsweise Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4-oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten.

Geeignet sind ferner auch Isocyanate, die aromatische Strukturelemente aufweisen, bei denen aber die Isocyanatgruppen zumindest teilweise an aliphatische und/oder cycloaliphatische Reste gebunden sind, insbesondere 1,3-Bis-(2-isocyanatopropyl-2-)benzol (TMXDI).

Besonders bevorzugt wird zur Herstellung der in der radikalisch vernetzbaren Komponente (KK) eingesetzten Oligo- und/oder Polyurethan(meth)acrylate zumindest anteilig das Isocyanurat von (cyclo)aliphatischen Isocyanaten, insbesondere das Isocyanurat von Isophorondiisocyanat und/oder Hexamethylendiisocyanat eingesetzt. Ganz besonders bevorzugt wird eine Mischung aus dem Isocyanurat von Isophorondiisocyanat und/oder dem Isocyanurat von Hexamethylendiisocyanat und/oder dem Biuret von Hexamethylen-diisocyanurat und/oder 1,3-Bis-(isocyanatomethyl)cyclohexan und/oder Dicyclohexylmethan-4,4'-diisocyanat eingesetzt.

Weiterhin geeignet sind die in der EP-B-1 144 476 auf Seite 4, Zeile 43, bis Seite 5, Zeile 31 beschriebenen höherfunktionellen Polyisocyanate auf Basis von Isocyanuraten, (dort a2.1 genannt), Uretdionen (dort a2.2 genannt), Biureten (dort a2.3 genannt), Urethan- und/oder Allophanatgruppen aufweisenden Polyisocyanaten (dort a2.4 genannt), Oxadiazintriongruppen aufweisende Polyisocyanate (dort a2.6 genannt) und Carbodiimid- oder Uretonimin-modifizierte Polyisocyanate (dort a.2.7 genannt).

Zur Herstellung der in der radikalisch vernetzbaren Komponente (KK) eingesetzten Oligomere und/oder Polymere, insbesondere der Oligo- und/oder Polyurethan-(meth)acrylate, werden außerdem bevorzugt zumindest anteilig cycloaliphatische Di- bzw. Polyole und/oder cycloaliphatische Di- und/oder Polyamine, insbesondere cycloaliphatische Diole eingesetzt, wie beispielsweise Cyclohexandimethanol, 1,2-, 1,3- oder 1,4-Cyclohexandiol, Cyclooctandiol, hydriertes Bisphenol-A, hydriertes Bisphenol-F und Tricyclodecandimethanol.

Besonders bevorzugt wird zur Herstellung der in der radikalisch vernetzbaren Komponente (KK) eingesetzten Oligomere und/oder Polymere, insbesondere der Oligo- und/oder Polyurethan(meth)acrylate, hydriertes Bisphenol-A eingesetzt.

Wie bereits erwähnt, können cyclische Strukturelemente auch über die Verwendung aromatischer Strukturelemente eingeführt werden, beispielsweise über die anteilige Verwendung von aromatischen Isocyanaten bzw. Trimeren und/oder Präpolymeren und/oder Addukten von aromatischen Isocyanaten, wie z. B. von 1,2- 1,3- und 1,4-Benzoldiisocyanat, 2,4- und 2,6-Tolyulendiisocyanat, 4,4'-Biphenylendiisocyanat, Bis(4-isocyanatophenyl)methan, 2,2-Bis(4-isocyanatophenyl)propan und die stellungsisomeren Naphthalindiisocyanate, insbesondere die technischen Gemische von 2,4- und 2,6-Tolyulendiisocyat. Weitere Beispiele für geeignete aromatische Struktureinheiten sind Triazinringe.

Diese Struktureinheiten können beispielsweise über die Verwendung von Tris(Alkoxycarbonylamino)Triazinen gemäss der US-PS 4 939 213, der US-PS 5 084 541 und der EP-A-624 577 eingeführt werden. Ebenso können Derivate der genannten Verbindungen zum Einsatz kommen.

Die radikalisch vernetzbare Komponente (KK) verfügt vorzugsweise über mindestens ein aliphatisches Strukturelement mit mindestens 6 C-Atomen, bevorzugt mit 6 bis 18 C-Atomen, besonders bevorzugt mit 6 C-Atomen, in der Kette.

Diese Strukturelemente wirken flexibilisierend auf die Komponente (KK). Mit steigendem Gehalt an aliphatischen Strukturelementen mit mindestens 6 C-Atomen in der Kette in der Komponente (KK) wird daher die Eigenschaft verschlechtert, dass die getrocknete, aber noch nicht endvernetzte transparente Beschichtung (KT) nicht mehr fließt und von einer ggf. aufgebrachten Schutzfolie nicht mehr geprägt wird.

Weiterhin ist die Chemikalienbeständigkeit der endvernetzten transparenten Beschichtung umso besser, je niedriger der Gehalt an aliphatischen Strukturelementen mit mindestens 6 C-Atomen in der Kette ist.

Bevorzugt weist die radikalisch vernetzbare Komponente (KK) 3 - 30 Gew.-%, vorzugsweise 5 - 25 Gew.-%, besonders bevorzugt 8 - 20 Gew.-%, jeweils bezogen auf das Gewicht der Komponente (KK) (aber selbstverständlich ohne nichtreaktive Komponenten, wie z. B. Lösemittel, Wasser oder Additive), aliphatische Strukturelemente mit mindestens 6 C-Atomen in der Kette auf. Zur Einführung in die Komponente (KK) geeignet sind alle längerkettigen Kohlenwasserstoffketten.

Die Einführung dieses aliphatischen Strukturelementes mit mindestens 6 C-Atomen in der Kette in die reaktive Komponente (KK) erfolgt durch Verwendung entsprechender Verbindungen mit diesem aliphatischen Strukturelement mit mindestens 6 C-Atomen in der Kette zur Herstellung der Komponente (KK). Insbesondere können zur Herstellung der Urethan(meth)acrylate Di- und/oder Polyisocyanate und/oder Kettenverlängerungsmittel (Di- bzw. Polyole, Di- bzw. Polyamine, Di- bzw. Polythiole, Di- und/oder Polycarbonsäuren etc.) mit diesem aliphatischen Strukturelement mit mindestens 6 C-Atomen in der Kette eingesetzt werden. Besonders bevorzugt werden Di- und/oder Polyole und/oder Di- und/oder Polycarbonsäuren und/oder Di- und/oder Polyisocyanate mit diesem aliphatischen Strukturelement mit mindestens 6 C-Atomen in der Kette eingesetzt.

Geeignet sind beispielsweise dimere und/oder trimere Fettsäuren zur Modifizierung des Di- und/oder Polyisocyanates.

Besonders bevorzugt in die radikalisch vernetzbare Komponente (KK) eingeführt wird dieses aliphatische Strukturelement mit mindestens 6 C-Atomen in der Kette durch die Verwendung von entsprechend funktionalisierten Derivaten des Hexamethylens, insbesondere durch Verwendung von Verbindungen auf Basis von Hexamethylen, die zusätzlich noch mindestens 1, bevorzugt mindestens 2, Isocyanatgruppen oder OH- und/oder NH- und/oder SH- Gruppen aufweisen, bei der Herstellung der Oligo- und/oder Polyurethan(meth)acrylate.

Beispielsweise einsetzbar sind Hexamethylendiisocyanat und/oder isocyanatfunktionelle Tri- bzw. Polymere und/oder isocyanatfunktionelle Addukte des Hexamethylendiisocyanates, insbesondere das Biuret und/oder das Isocyanurat des Hexamethylendiisocyanates. Ferner einsetzbar sind auch das Hexamethylendiol und/oder das Hexamethylendiamin oder ähnliche Verbindungen. Möglich ist schliesslich auch die Verwendung von Verbindungen, die außer mindestens 1 ethylenisch ungesättigten Doppelbindung und mindestens 1 reaktiven Gruppe, die gegenüber Isocyanatgruppen oder OH-Gruppen oder NH-Gruppen reaktiv ist, noch dieses aliphatische Strukturelement mit mindestens 6 C-Atomen in der Kette aufweist, wie z. B. Hydroxyhexylacrylat.

Entsprechend ist auch eine Flexibilisierung der Polyether(meth)acrylate und der Polyester(meth)acrylate beispielsweise dadurch möglich, dass entsprechende OHfunktionelle Präpolymere bzw. Oligomere (Polyether oder Polyester-Basis) mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/oder Dimerfettsäuren, umgesetzt werden. Diese Flexibilisierungsreaktion kann dabei vor oder nach der Addition von Acryl- bzw. Methacrylsäure an die Oligomere bzw. Präpolymere durchgeführt werden. Eine Flexibilisierung der Epoxy(meth)acrylate ist beispielsweise analog dadurch möglich, dass entsprechende epoxyfunktionelle Präpolymere bzw. Oligomere mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/oder Dimerfettsäuren umgesetzt werden. Diese Flexibilisierungsreaktion kann dabei vor oder nach der Addition von Acryl- bzw. Methacrylsäure an die Oligomere bzw. Präpolymere durchgeführt werden.

Wie oben ausgeführt, führt die Flexibilisierung der Polyether(meth)acrylate bzw. der Polyester(meth)acrylate bzw. der Epoxy(meth)acrylate, also ein steigender Gehalt an an aliphatischen Strukturelementen mit mindestens 6 C-Atomen in der Kette, dazu, dass die Eigenschaft verschlechtert wird, dass die getrocknete, aber noch nicht endvernetzte transparente Beschichtung (KT) nicht mehr fließt und von einer ggf. aufgebrachten Schutzfolie nicht mehr geprägt wird.

Die radikalisch vernetzbare Komponente (KK) enthält weiterhin vorzugsweise Carbamat- und/oder Biuret- und/oder Allophanat- und/oder Harnstoff- und/oder Amidgruppen. Besonders bevorzugt enthält die Komponente (KK) Biuret- und/oder Allophanatgruppen.

Je höher der Gehalt an Carbamat- und/oder Biuret- und/oder Allophanat- und/oder Harnstoff- und/oder Amidgruppen ist, desto geringer ist die Neigung der getrockneten, aber noch nicht endvernetzten Klarlackschicht (KT) zum Fließen.

Je höher der Gehalt an Carbamat- und/oder Biuret- und/oder Allophanat- und/oder Harnstoff- und/oder Amidgruppen ist, desto besser sind im Allgemeinen auch die Eigenschaften der endvernetzten transparenten Beschichtung (KE).

Ganz besonders bevorzugt wird der Gehalt an Carbamat- und/oder Biuret- und/oder Allophanat- und/oder Harnstoff- und/oder Amidgruppen eingestellt über die Art und Menge der verwendeten Isocyanataddukte bzw. Isocyanatpräpolymere.

Bevorzugt weist die radikalisch vernetzbare Komponente (KK) durchschnittlichen Gehalt an Carbamat- und/oder Biuret- und/oder Allophanat- und/oder Harnstoff- und/oder Amidgruppen von mehr als 0 bis 2,0 mol pro 1000 g reaktive Komponente (KK), vorzugsweise einen Gehalt von 0,1 bis 1,1 mol und besonders bevorzugt einen Gehalt von 0,2 bis 0,7 mol pro 1000 g reaktive Komponente (KK) auf, wobei die Werte jeweils bezogen sind auf das Gewicht der radikalisch vernetzbaren Komponente (KK), aber selbstverständlich ohne nichtreaktive Komponenten, wie z. B. Lösemittel, Wasser oder Additive.

Die transparente Lackzusammensetzung enthält bevorzugt 30,0 bis 99,9 Gew.-%, besonders bevorzugt 40 bis 85 Gew.-% und ganz besonders bevorzugt 50 bis 75 Gew.-%, jeweils bezogen auf das Gesamtgewicht des Beschichtungsmittels (K), der Komponente (KK).

Vorzugsweise enthält die transparente Lackzusammensetzung mindestens einen Initiator der chemischen Vernetzung. Vorzugsweise sind diese Initiatoren Photoinitiatoren. Bevorzugt wird der Photoinitiator oder werden die Photoinitiatoren aus der Gruppe, bestehend aus unimolekularen (Typ I) und bimolekularen (Typ II) Photoinitiatoren ausgewählt. Besonders bevorzugt werden die Photoinitiatoren des Typs I aus der Gruppe, bestehend aus Benzophenonen in Kombination mit tertiären Aminen, Alkylbenzophenonen, 4,4'-Bis(dimethylamino)benzophenon (Michlers Keton), Anthron und halogenierten Benzophenonen, und die Photoinitiatoren des Typs II aus der Gruppe, bestehend aus Benzoinen, Benzoinderivaten, insbesondere Benzoinethern, Benzilketalen, Acylphosphinoxiden, insbesondere bei 2,4,6-Trimethylbenzoyldiphenylphosphinoxid und Ethyl-2,4,6-trimethylbenzoylphenyl-phosphinat, Bisacylphosphinoxiden, Phenylglyoxylsäureestern, Campherchinon, alpha-Aminoalkylphenonen, alpha,alpha-Dialkoxyacetophenonen und alpha-Hydroxyalkylphenonen, ausgewählt.

Wenn die Beschichtungsmittel ausschließlich oder zusätzlich thermisch endvernetzt werden, enthalten sie bevorzugt C-C-spaltende Initiatoren, vorzugsweise Benzpinakole. Beispiele geeigneter Benzpinakole sind Benzpinakolsilylether oder die substituierten und unsubstituierten Benzpinakole, wie sie in dem amerikanischen Patent US 4,288,527 A in Spalte 3, Zeilen 5 bis 44, und der WO02/16461, Seite 8, Zeile 1, bis Seite 9, Zeile 15, beschrieben werden. Bevorzugt werden Benzpinakolsilylether, insbesondere Gemische aus monomeren und oligomeren Benzpinakolsilylethern, verwendet.

Der Gehalt der Initiatoren in der transparenten Lackzusammensetzung kann breit variieren und richtet sich nach den Erfordernissen des Einzelfalls und den anwendungstechnischen Eigenschaften, die die hieraus hergestellten Beschichtungen (KE) haben sollen. Vorzugsweise liegt der Gehalt bei 0,1 bis 10, insbesondere 1,0 bis 7,0 Gew.-%, jeweils bezogen auf den Festkörper der transparenten Lackzusammensetzung.

Darüber hinaus können die transparenten Lackzusammensetzungen übliche und bekannte Zusatzstoffe in wirksamen Mengen enthalten. Üblicherweise beträgt die Menge dieser Zusatzstoffe zwischen 0 und 10 Gew.-%, bevorzugt zwischen 0,2 und 5,0 Gew.-%, jeweils bezogen auf den Festkörper des Beschichtungsmittels (K). Vorzugsweise werden sie aus der Gruppe, bestehend aus Lichtschutzmitteln, wie UV-Absorber und reversible Radikalfänger (HALS); Antioxidantien; Netzmitteln; Emulgatoren; Slipadditiven; Polymerisationsinhibitoren; Haftvermittlern; Verlaufmitteln; filmbildenden Hilfsmitteln; Rheologiehilfsmitteln; Flammschutzmitteln; Korrosionsinhibitoren, die keine Pigmente sind; Rieselhilfen; Wachsen; Sikkativen; Bioziden und Mattierungsmitteln, ausgewählt.

Beispiele geeigneter Zusatzstoffe werden im Detail in dem Lehrbuch "Lackadditive" von Johan Bieleman, Wiley-VCH, Weinheim, New York, 1998, in D. Stoye und W. Freitag (Editors), in der deutschen Patentanmeldung DE 199 14 896 A1, Spalte 14, Zeile 26, bis Spalte 15, Zeile 46, oder in der deutschen Patentanmeldung DE 199 08 018 A1, Seite 9, Zeile 31, bis Seite 8, Zeile 30, beschrieben.

Die vernetzbaren Beschichtungsmittel (K) enthalten im Allgemeinen noch konventionelle Lösemittel und/oder Wasser, können aber auch im wesentlichen oder vollständig frei von Lösemittel und im Wesentlichen oder vollständig frei von Wasser als sogenannte 100% Systeme formuliert werden. Wenn die Beschichtungsmittel (K) Lösemittel enthalten, dann enthalten sie bevorzugt 20 bis 70 Gew.-%, besonders bevorzugt 30 bis 64,5 Gew.-% und ganz besonders bevorzugt 40 bis 60 Gew.-%, jeweils bezogen auf das Gesamtgewicht des Beschichtungsmittels (K), eines oder mehrerer Lösemittel und/oder Wasser, bevorzugt eines oder mehrerer organischer Lösemittel.

Geeignet sind alle üblicherweise in Klarlacken eingesetzten Lösemittel, insbesondere Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Dipropylenglykolmethylether, Glykolsäurebutylester, Shellsol® T, Pine Oel 90/95, Solventnaphtha®, Shellsol® A, Benzin 135/180 u.ä.

Bevorzugt ist das vernetzbare Beschichtungsmittel im wesentlichen oder vollständig frei von Wasser.

Bevorzugt enthält das vernetzbare Beschichtungsmittel (K) weniger als 20 Gew.-%, insbesondere weniger als 10 Gew.-%, besonders bevorzugt weniger als 5 Gew.-%, jeweils bezogen auf das Gewicht der Komponente (KK), und ganz besonders bevorzugt keinen polymeren, gesättigten Bestandteil (KS), insbesondere keine thermoplastischen Polymeren.

Methodisch weist die Herstellung der Beschichtungsmittel (K) keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Kneter, Ultraturrax, Inline-Dissolver, statische Mischer, Zahnkranzdispergatoren, Druckentspannungsdüsen und/oder Microfluidizer, bevorzugt unter Ausschluss von aktinischer Strahlung.

Das transparente Beschichtungsmittel wird üblicherweise in solchen Menge aufgetragen, dass eine Trockenfilmschichtdicke von mindestens 15 µm, bevorzugt eine Trockenfilmschichtdicke von 20 bis 100 µm, besonders bevorzugt von 20 bis 50 µm, resultiert.

Das transparente Beschichtungsmittel kann weiterhin mindestens ein Lichtschutzmittel (L) ausgewählt aus der Gruppe bestehend aus niedermolekularen, oligomeren und polymeren Lichtschutzmitteln, die mindestens eine isocyanatreaktive Gruppe enthalten, sowie mindestens einen Photoinitiator (P), der mindestens eine isocyanatreaktive funktionelle Gruppe enthält, umfassen.

Die Lichtschutzmittel (L) werden aus der Gruppe bestehend aus niedermolekularen, oligomeren und polymeren Lichtschutzmitteln, die mindestens eine, insbesondere eine, isocyanatreaktive funktionelle Gruppe enthalten, ausgewählt. Vorzugsweise werden sie aus der Gruppe bestehend aus UV-Absorbern und reversiblen Radikalfängern ausgewählt. Bevorzugt werden die UV-Absorber (L) aus der Gruppe bestehend aus Benzotriazolen und Triazinen und die reversiblen Radikalfänger (L) aus der Gruppe bestehend aus sterisch gehinderten cyclischen Aminen, insbesondere HALS, ausgewählt.

Vorzugsweise handelt es sich bei den isocyanatreaktiven funktionellen Gruppen um Hydroxylgruppen. Dabei sind Hydroxylgruppen, die in unmittelbarer Nachbarschaft zu einem Benzotriazol-System angeordnet sind und daher mit einem Stickstoff des Triazolrings in Wechselwirkung treten, sowie sterisch stark gehinderte Phenolgruppen, die beispielsweise zwischen zwei tertiären Butylgruppen angeordnet sind, keine isocyanatreaktiven funktionellen Gruppen i. S. der vorliegenden Erfindung.

Beispiele geeigneter niedermolekularer Lichtschutzmittel (L) sind
- eine Mischung aus 2-(4-((2-Hydroxy-3-undecyl-oxypropyl)-oxyl)-2-hydroxyphenyl) 4,6-bis(2,4-dimethylphenyl)-1,3,5-triazin und 2-(4-((2-Hydroxy-3-tridecyl-oxy-propyl)oxyl)-2-hydroxyphenyl)4,6-bis(2,4-dimethylphenyl)-1,3,5-triazin, die unter der Marke Tinuvin® 400 von der Firma Ciba Spezialitätenchemie verkauft wird,
- das Versuchsprodukt der Firma Ciba Spezialitätenchemie Tinuvin® CGL 052, das eine Triazingruppe und zwei cyclische, sterisch gehinderte Aminoethergruppen enthält, und
- das in der deutschen Patentanmeldung DE 100 10 416 A1 , Seite 4, beschriebene Lichtschutzmittel-Monomer (a3).

Beispiele geeigneter oligomerer und polymerer Lichtschutzmittel (L) sind auch die in der deutschen Patentanmeldung DE 100 10 416 A1, Seite 3, Zeile 31, bis Seite 5, Zeile 32, und Seite 14, Zeile 42, bis Seite 17, Zeile 20, beschriebenen (Meth)Acrylatcopolymerisate des Lichtschutzmittel-Monomers (a3).

Der Gehalt an den zu verwendenden Lichtschutzmitteln (L) kann sehr breit variieren und richtet sich nach den Erfordernissen des Einzelfalls. Vorzugsweise werden die Lichtschutzmittel (L) in den für Lichtschutzmittel üblichen und bekannten, wirksamen Mengen, vorzugsweise in einer Menge von 0,1 bis 5, bevorzugt 0,2 bis 4,5, besonders bevorzugt 0,3 bis 4, ganz besonders bevorzugt 0,4 bis 3,5 und insbesondere 0,5 bis 3 Gew.-%, jeweils bezogen auf den Festkörperanteil der transparenten Lackzusammensetzung, eingesetzt.

Die transparente Lackzusammensetzung kann weiterhin mindestens einen Photoinitiator (P) und insbesondere mindestens zwei Photoinitiatoren (P) mit mindestens einer, insbesondere einer, isocyanatreaktiven funktionellen Gruppe enthalten.

Vorzugsweise werden die Photoinitiatoren (P) aus der Gruppe, bestehend aus Benzilmonoketalen, Acetophenonderivaten, Benzylformaten, Monoacylphosphinoxiden und Diacylphosphinoxiden, ausgewählt. Insbesondere sind die Photoinitiatoren (P) Acetophenonderivate.

Vorzugsweise handelt es sich bei den isocyanatreaktiven funktionellen Gruppen um Hydroxylgruppen. Dabei sind Hydroxylgruppen, die über die Keto-Enol-Tautomerie mit einer benachbarten Carbonylgruppe in Wechselwirkung treten und/oder sterisch stark gehindert sind, keine isocyanatreaktiven funktionellen Gruppen i. S. der Erfindung.

Ein Beispiel für einen geeigneten Photoinitiator (P) ist 1-[4-(2-Hydroxyethoxy)-phenyl]-2-hydroxy-2-methyl-1-propan-1-on, das unter der Marke Irgacure® 2959 von der Firma Ciba Spezialitätenchemie vertrieben wird.

Der Gehalt an Photoinitiatoren (P) kann sehr breit variieren und richtet sich nach den Erfordernissen des Einzelfalls. Vorzugsweise werden die Photoinitiatoren (P) in den für Photoinitiatoren üblichen und bekannten, wirksamen Mengen, vorzugsweise in einer Menge von 0,1 bis 5, bevorzugt 0,2 bis 4,5, besonders bevorzugt 0,3 bis 4, ganz besonders bevorzugt 0,4 bis 3,5 und insbesondere 0,5 bis 3 Gew.-%, jeweils bezogen auf den Festkörperanteil der transparenten Lackzusammensetzung, eingesetzt.

Die erfindungsgemäßen Zweischichtbeschichtungs-Beschichtungssysteme können zur Herstellung von beschichteten Materialien, insbesondere von Folien, Formteilen, Beschichtungen, Klebstoffen und Dichtungen, dienen.

Insbesondere können die erfindungsgemäßen Zweischicht-Beschichtungszusammensetzungen zur Herstellung mehrschichtiger Lackierungen, insbesondere von Decklackierungen, in der Automobilserien- und -reparaturlackierung dienen. Beschichtet werden dabei in der Regel übliche Substrate, die ggf. mit einer kathodischen Tauchlackierung und bereits mit einem Füller vorbeschichtet wurden.

So kann vor allem eine verbesserte Decklack-Zwischenschichthaftung dadurch erzielt werden, dass dem Klarlack ein wie zuvor beschriebenes hydroxyfunktionelles Bindemittel und dem Basislack ein entsprechendes, wie zuvor beschriebenes blockiertes Isocyanat zugesetzt wird.

Die erfindungsgemäßen Zweischicht-Beschichtungszusammensetzungen können jedoch auch vorzugsweise zur Herstellung mehrfach beschichteter Folien eingesetzt werden. Die beschichteten Folien können dann selbst für die Beschichtung verschiedenster Substrate, oder aber zur Herstellung von Formteilen dienen. Bei den mit der erfindungsgemäßen Zweischicht-Beschichtung beschichteten Folien kann es sich vor allem um thermoplastische Trägerfolien oder um Schutzfolien handeln.

Bei thermoplastischen Trägerfolien handelt es sich dabei um Folien, die mit der Kunststoffformmasse eines Formteils verbunden werden können. Zwischen der Oberfläche (T1) und der späteren Beschichtung (B) kann sich noch mindestens eine, insbesondere eine, Zwischenschicht (ZS), wie z. B. Füllerschicht (FS) und/oder Haftvermittlerschicht (HS) befinden. Dabei kann oder können sich zwischen der Oberfläche (T1) und der Haftvermittlerschicht (HS) und/oder zwischen der Haftvermittlerschicht (HS) und der Beschichtung (B) mindestens eine, insbesondere eine, Übergangsschicht (ÜS) befinden. Bevorzugt ist aber die Beschichtung (B) direkt, also ohne Zwischenschicht, auf der Oberfläche (T1) angeordnet.

Thermoplastische Trägerfolien bestehen im Wesentlichen oder völlig aus mindestens einem thermoplastischen Polymer. Vorzugsweise wird das thermoplastische Polymer aus der Gruppe, bestehend aus üblichen und bekannten, linear, verzweigt, sternförmig kammförmig und/oder, blockartig aufgebauten Homo- und Copolymerisaten, ausgewählt. Bevorzugt werden die Homo- und Copolymerisate aus der Gruppe, bestehend aus Polyurethanen, Polyestern, insbesondere Polyethylenterephthalaten und Polybutylenterephthalaten, Polyethern, Polyolefinen, Polyamiden, Polycarbonaten, Polyvinylchloriden, Polyvinylidenfluoriden, Poly(meth)acrylaten, insbesondere Polymethylmethacrylaten und Polybutylmethacrylaten und schlagzäh modifizierten Polymethylmethacrylaten, Polystyrolen, insbesondere schlagzäh modifizierten Polystyrolen, speziell Acrylnitrilbutadienstyrolcopolymeren (ABS), Acrylstyrolacrylnitrilcopolymeren (ASA) und Acrylnitrilethylenpropylendienstyrolcopolymeren (A-EPDM); Polyetherimiden, Polyetherketonen, Polyphenylensulfiden, Polyphenylenethern und Mischungen dieser Polymeren, ausgewählt.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Mit besonderem Vorteil werden ASA, Polycarbonate, Blends aus ASA und Polycarbonaten, Polypropylen, Polymethylmethacrylate oder schlagzäh modifizierte Polymethylmethacrylate, insbesondere Blends aus ASA und Polycarbonaten, bevorzugt mit einem Polycarbonatanteil > 40%, insbesondere > 50%, verwendet.

Für die thermoplastische Trägerfolie bevorzugt eingesetzte Materialien sind auch insbesondere die in der DE-A-101 13 273 auf Seite 2, Zeile 61, bis Seite 3, Zeile 26 beschriebenen thermoplastischen Polymeren.

Die Homo- und Copolymerisate können die auf dem Gebiet der thermoplastischen Kunststoffe üblichen und bekannten Additive enthalten. Außerdem können sie übliche und bekannte Füllstoffe, Verstärkerfüllstoffe und Fasern enthalten. Nicht zuletzt können sie auch die Pigmente einschließlich Effektpigmente und/oder übliche und bekannte Farbstoffe enthalten und so eine Farbtonanpassung der Trägerfolien an den Farbton der aus den pigmentierten Beschichtungsmitteln (P) erhaltenen Beschichtung ermöglichen.

Die Schichtdicke der thermoplastischen Trägerfolie liegt üblicherweise bei mehr als 0,5 mm, bevorzugt zwischen 0,7 und 2,0 mm und besonders bevorzugt zwischen 0,9 und 1,2 mm.

Als Übergangschichten (ÜS) können übliche und bekannte, vorzugsweise 1 bis 50 µm dicke Schichten aus thermoplastischen Materialien, insbesondere aus den vorstehend beschriebenen thermoplastischen Polymeren verwendet werden.

Die Haftvermittlerschicht wird dann verwendet, wenn die Haftung zwischen der Trägerfolie (T) und der Kunststoffmasse (KM) ungenügend ist, beispielsweise, wenn für (T) oder (KM) Polyolefine zum Einsatz kommen. Als Haftvermittlerschicht (HS) können übliche und bekannte, wie z. B. in DE-A-101 13 273 auf Seite 4, Zeilen 27 bis 29 beschrieben, vorzugsweise 1 bis 100 µm dicke Schichten aus üblichen Haftvermittlern verwendet werden.

Als Schutzfolie (S) geeignet sind alle üblicherweise eingesetzten Schutzfolien, die ein- oder mehrschichtig sein können. Insbesondere werden die in der DE-A-10335620, Seite 17, Zeile 20, bis Seite 19, Zeile 22, beschriebenen Schutzfolien eingesetzt. Geeignet sind insbesondere Schutzfolien (S) auf Basis von Homo- und Copolymerisaten aus Polyethylen, Polypropylen, Ethylencopolymerisaten, Propylen-copolymerisaten und Ethylen-Propylen-Copolymerisaten.

Bevorzugt wird die Schutzfolie derart ausgewählt, dass sie bei einer Schichtdicke von 50 µm eine Transmission > 70% für UV-Strahlung und sichtbares Licht einer Wellenlänge von 230 bis 600 nm hat.

Ferner werden bevorzugt Schutzfolien eingesetzt, die im Temperaturbereich von Raumtemperatur bis 100 °C einen Speichermodul E' von mindestens 10⁷ Pa sowie längs und quer zu der bei der Herstellung der Schutzfolie mit Hilfe gerichteter Herstellverfahren erzeugten Vorzugsrichtung bei 23 °C eine Bruchdehnung > 300% aufweisen. Besonders bevorzugt weist die der Beschichtung (B) zugewandte Seite der Schutzfolie außerdem eine Härte < 0,06 GPa bei 23 °C und eine mit Hilfe der atomic force miscroscopy (AFM) bestimmte Rauhigkeit, entsprechend einem Ra-Wert aus 50 µm² < 30 nm, auf.

Ganz besonders bevorzugt sind die Schutzfolien (S) 10 bis 100 µm, insbesondere 30 bis 70 µm, dick.

Die erfindungsgemäß zu verwendenden Schutzfolien (S) sind üblich und bekannt und werden beispielsweise von der Firma Bischof + Klein, D-49525 Lengerich, unter der Bezeichnung GH-X 527, GH-X 529 und GH-X-535 angeboten.

Die Erfindung umfasst weiterhin Verfahren zur Herstellung in der Automobilserien- und -reparaturlackierung beschichteter Substrate, die mit den erfindungsgemäßen mehrschichtiger Lackierungen beschichtet wurden, wobei ein ggf. mit einer kathodischen Tauchlackierung und einem üblichen Füller vorbeschichtetes Substrat zunächst mit der pigmentierten Lackzusammensetzung und dann mit der transparenten Klarlackzusammensetzung beschichtet wird. Vorzugsweise erfolgt das Beschichten dabei nach dem Naß-in-Naß-Verfahren, d.h. die transparente Klarlackzusammensetzung wird auf die pigmentierte Lackzusammensetzung nach einer Zwischentrocknung (Ablüften) der pigmentierten Lackzusammensetzung, aber ohne zwischenzeitliches Einbrennen der pigmentierten Lackzusammensetzung aufgetragen, und die beiden Schichten werden anschließend gemeinsam gehärtet.

Die Beschichtung mit der pigmentierten Lackzusammensetzung und der transparenten Lackzusammensetzung erfolgt dabei unter den üblichen Bedingungen für das Aufbringen von Decklackschichten in der Serien- oder Reparaturlackierung. Ein Vorteil dabei ist, dass die Härtung der Zweischichtbeschichtung bei Temperaturen unterhalb von 130 °C erfolgen kann.

Weiterhin umfasst die Erfindung ein Verfahren zur Herstellung von mit dem erfindungsgemäßen Zweischicht-Beschichtungssystem beschichteten Folien, bei dem eine Folie zunächst mit der pigmentierten Lackzusammensetzung und dann mit der transparenten Lackzusammensetzung beschichtet wird.

Außerdem umfasst die vorliegende Erfindung ein Verfahren zur Herstellung von mit dem erfindungsgemäßen Zweischicht-Beschichtungssystem beschichteten Folien, bei dem eine Folie zunächst mit der transparenten Lackzusammensetzung und dann mit der pigmentierten Lackzusammensetzung beschichtet wird.

In beiden Fällen erfolgt bevorzugt zunächst eine Beschichtung der Folien mit der zuerst aufzubringenden Schicht des Zweischichtsystems, ohne diese einzubrennen.

Daraufhin wird die zweite Schicht des Zweischichtsystems aufgebracht und zusammen mit der ersten Schicht eingebrannt. Auch hier erfolgt die Härtung der Schichten vorzugsweise unterhalb von 130 °C.

Der Auftrag der einzelnen Schichten des Zweischichtsystems auf das Substrat kann mittels dem Fachmann bekannter und geeigneter Methoden erfolgen, beispielsweise durch Streichen, Rollen, Walzen, Rakeln, Fluten, Giessen, Tauchen oder Sprühen.

Die Härtung der aufgebrachten Schichten des Zweischichtsystems kann ebenfalls mittels dem Fachmann bekannter und geeigneter Methoden erfolgen, beispielsweise durch aktinische Strahlung, vorzugsweise UV-Strahlung, oder durch thermisches Härten, vorzugsweise bei Temperaturen unterhalb von 130°C. Strahlenhärtung und thermische Härtung können weiterhin kombiniert werden und dazu nacheinander oder gleichzeitig durchgeführt werden. Unter aktinischer Strahlung wird elektromagnetische Strahlung verstanden, insbesondere Elektronenstrahlen, UV-Strahlen und sichtbares Licht.

Beschichtete Folien, die zunächst mit der transparenten Lackzusammensetzung und dann mit der pigmentierten Lackzusammensetzung beschichtet sind, lassen sich vorteilhaft zur Erzeugung zweischichtbeschichteter Formkörper einsetzen, von denen die Folie von dem Formkörper (unter Verbleib der Zweischichtbeschichtung auf dem Formkörper) nach der Herstellung wieder abgelöst werden kann.

### Beispiele

### Basislack-Herstellung

Zur Herstellung des Basislacks A wurde der handelsübliche pigmentierte Wasserbasislack "Brillantsilber" der BASF Coatings AG mit vollentsalztem Wasser auf eine Viskosität von 120 mPa·s (gemessen per Viskosimeter (Rheomat RM 180, Spindel 2) bei 23°C und einem Schergefälle von 1000 s⁻¹) eingestellt.

Zur Herstellung des erfindungsgemäßen Basislacks B wurde der handelsübliche pigmentierte Wasserbasislack "Brillantsilber" der BASF Coatings AG mit 7,5 Gew.-%, bezogen auf den gesamten Basislack B, eines wasserlöslichen, mit Dimethylpyrazol blockierten HDI-Polyisocyanats vermischt und mit vollentsalztem Wasser auf eine Viskosität von 120 mPa·s (gemessen per Viskosimeter (Rheomat RM 180, Spindel 2) bei 23°C und einem Schergefälle von 1000 s⁻¹) eingestellt.

### Klarlack-Herstellung

In einem geeigneten Rührgefäß wurde das Urethanacrylat vorgelegt. Zur Vorlage wurden innerhalb von 30 Minuten die in der Tabelle 1 angegebenen Komponenten (OH-Gruppen-haltiges Bindemittel, UV-Absorber, HALS, Photoinitiatoren und Verlaufsmittel) unter ständigem Rühren bei Raumtemperatur zugegeben und mit 1-Methoxypropyl-2-acetat auf einen Festkörpergehalt von 48% eingestellt. Anschließend wurde die resultierende Mischung während 30 Minuten bei Raumtemperatur gerührt.

**Tabelle 1:**

| | **I** | **II** | **III** | **IV** | **V** | **VI** |
|---|---|---|---|---|---|---|
| Doppelbindungshaltiges Urethanacrylat-Harz | 145,3 | 143,0 | 142,9 | 140,6 | 140,2 | 149,4 |
| OH-funkt. acrylierter Polyester ohne Doppelbindungen (OHZ = 186) | 2,63 | | | | | |
| Pentaerythritoltriacrylat (OHZ = 106 -135) | | 4,06 | | | | |
| Dipentaerythritolhydroxy-Pentaacrylat (OHZ ca. 110) | | | 4,14 | | | |
| IRR 351, ucb Chemicals (OH-funkt. Urethan-acrylat, OHZ = 75 - 90) | | | | 5,61 | | |
| STON 0254 (OH-funkt. doppel-bindungshaltiges Bindemittel (OHZ = 65,6) | | | | | 8,08 | |
| Tinuvin 292 | 0,9 | 0,9 | 0,9 | 0,8 | 0,8 | 0,9 |
| Tinuvin 400 | 2,1 | 2,0 | 2,0 | 2,0 | 2,0 | 2,1 |
| Lucirin TPO-L | 0,7 | 0,7 | 0,7 | 0,7 | 0,7 | 0,7 |
| Irgacure 184 | 2,6 | 2,6 | 2,6 | 2,5 | 2,5 | 2,7 |
| BYK 325 | 0,4 | 0,4 | 0,4 | 0,4 | 0,4 | 0,4 |
| 1-Methoxypropylacetat-2 | 45,5 | 46,4 | 46,4 | 47,3 | 45,2 | 43,8 |
| **Σ** | **200,0** | **200,0** | **200,0** | **200,0** | **200,0** | **200,0** |

### Applikation

Mit einem Kastenrakel wurde eine Nassschicht von 150 µm Basislack auf einen Folienzuschnitt vom Typ Luran S PFM aufgebracht (150 µm nass, ca. 25 µm trocken, 10 mm/s Rakelgeschwindigkeit), 10 Minuten bei Raumtemperatur und anschließend 10 Minuten bei 90°C in einem Abluftofen getrocknet.

Auf die getrocknete Basislack-Schicht wurde anschließend der Klarlack mit einem Kastenrakel aufgebracht (200 µm nass, ca. 60 µm trocken, 10 mm/s Rakelgeschwindigkeit), 20 Minuten bei Raumtemperatur und anschließend 15 Minuten bei 105°C in einem Abluftofen getrocknet.

Der Klarlack wurde durch UV-Licht vernetzt (Anlage der Fa. IST, Dosis: 2300 mJ/cm², Ga-/Hg-Lampen mit 200 W/cm Leistung, eingestellt auf 85%/95% Lampenleistung bei einer Bandgeschwindigkeit von 5 m/min., 200 ppm O₂) und nach 7 Tagen gemäß DC- (Daimler Chrysler)-Spezifikation DBL 5416 einem Dampfstrahltest unterzogen. Weiterhin wurden die erhaltenen Zweischichtbeschichtungen im Hinblick auf ihren Verbund mit der Gitterschnittmethode nach DIN EN ISO 2409 untersucht. Ergebnisse s. Tabelle 2.

**Tabelle 2:**

| | | **I** | **II** | **III** | **IV** | **V** | **VI** |
|---|---|---|---|---|---|---|---|
| Dampfstrahl nach DaimlerChrysler | **A** | 5/5/5 | 5/5/5 | 5/5/5 | 5/5/5 | 5/5/5 | 5/5/5 |
| | **B** | 5/5/5 | 2/3/4 | 4/4/2 | 3/4/4 | 4/4/4 | 5/5/5 |
| Gitterschnitt (2 mm) | **B** | 3-4 | 2-3 | 3 | 3 | 3-4 | 3 |

### Herstellung: Bestandteile unter Rühren zusammengeben

### Legende Dampfstrahltest-Ergebnisse:

| | |
|---|---|
| 0 | - i.O., keine Unterwanderung |
| 1 | - noch i.O., leichte Unterwanderung |
| 2-5 | - immer stärkere Unterwanderung |

### Legende Gitterschnitt-Ergebnisse:

0 - Die Schnittränder sind vollkommen glatt. Keines der Quadrate ist abgeplatzt.
1 - Die abgeplatzte Fläche ist nicht wesentlich größer als 5% der Gitterschnittfläche
2 - Die abgeplatzte Fläche ist deutlich größer als 5%, aber nicht wesentlich größer als 15% der Gitterschnittfläche
3 - Die abgeplatzte Fläche ist deutlich größer als 15%, aber nicht wesentlich größer als 35% der Gitterschnittfläche
4 - Die abgeplatzte Fläche ist deutlich größer als 35%, aber nicht wesentlich größer als 65% der Gitterschnittfläche
5 - alle Ergebnisse, die nicht mehr als 4 eingestuft werden können

Die erfindungsgemäßen Beispiele (B.II - B.V) zeigen eine deutlich verbesserte Zwischenschichthaftung mit gleich guten optischen Eigenschaften. Die resultierenden Folien weisen weiterhin eine hohe Flexibilität auf.

## Patentansprüche

1. Zweischicht-Beschichtungssystem zur Erzeugung einer zweischichtigen Beschichtung, enthaltend
(A) eine Zusammensetzung eines transparenten strahlenhärtbaren oder strahlen- und thermisch härtbaren Klarlacks, umfassend mindestens ein hydroxyfunktionelles Bindemittel, und
(B) eine pigmentierte Lack-Zusammensetzung,
**dadurch gekennzeichnet, dass** die pigmentierte Lack-Zusammensetzung mindestens ein blockiertes, wasserlösliches oder wasserdispergierbares Isocyanat umfasst.

2. Zweischicht-Beschichtungssystem nach Anspruch 1, **dadurch gekennzeichnet, dass** das mindestens eine Isocyanat der pigmentierten Lack-Zusammensetzung ein aliphatisches Isocyanat ist.

3. Zweischicht-Beschichtungssystem nach Anspruch 1 oder 2, **dadurch gekennzeichnet, dass** das mindestens eine Isocyanat ein polymeres Isocyanat, bevorzugt ein HDI- oder IPDI-Polyisocyanat mit Poly- oder Oligoethylenoxidgruppen, ist.

4. Zweischicht-Beschichtungssystem nach einem oder mehreren der vorhergehenden Ansprüche 1 bis 3, **dadurch gekennzeichnet, dass** der Anteil des mindestens einen Isocyanates an der pigmentierten Lackzusammensetzung 15 bis 35 Gew.-%, bezogen auf den Festkörperanteil der pigmentierten Lackzusammensetzung, beträgt.

5. Zweischicht-Beschichtungssystem nach einem oder mehreren der vorhergehenden Ansprüche 1 bis 4, **dadurch gekennzeichnet, dass** das mindestens eine Isocyanat ein nicht-kristallines blockiertes Isocyanat ist, das bei Temperaturen von ≤ 150 °C, bevorzugt ≤ 130 °C deblockierbar ist.

6. Zweischicht-Beschichtungssystem nach einem oder mehreren der vorhergehenden Ansprüche 1 bis 5, **dadurch gekennzeichnet, dass** die pigmentierte Lack-Zusammensetzung ein oder mehrere lösemittelhaltige oder wässrige pigmentierte Beschichtungsmittel umfasst, die
(I) ein oder mehrere Lösemittel und/oder Wasser
(II) ein oder mehrere Bindemittel, bevorzugt ein oder mehrere Polyurethanharze und/oder Acrylatharze,
(III) ggf. mindestens ein Vernetzungsmittel,
(IV) ein oder mehrere Pigmente sowie
(V) ggf. ein oder mehrere übliche Hilfs- und Zusatzstoffe enthalten.

7. Zweischicht-Beschichtungssystem nach einem oder mehreren der vorhergehenden Ansprüche 1 bis 6, **dadurch gekennzeichnet, dass** das System aus einer wässrigen pigmentierten Lack-Zusammensetzung und einer nicht-wässrigen transparenten Klarlackzusammensetzung besteht.

8. Zweischicht-Beschichtungssystem nach einem oder mehreren der vorhergehenden Ansprüche 1 bis 7, **dadurch gekennzeichnet, dass** das hydroxyfunktionelle Bindemittel in der transparenten Klarlackzusammensetzung ein oligo- oder polyhydroxyfunktionelles Bindemittel, vorzugsweise mit einer Hydroxylzahl von 50 bis 150, mit mindestens einer radikalisch reaktiven Gruppe, vorzugsweise mit einer Funktionalität hinsichtlich der radikalisch reaktiven Gruppe von 4,0 bis 11,0 mol/kg, ist.

9. Zweischicht-Beschichtungssystem nach einem oder mehreren der vorhergehenden Ansprüche 1 bis 8, **dadurch gekennzeichnet, dass** das gewichtsmittlere Molekulargewicht des hydroxyfunktionellen Bindemittels 300 bis 2000 g/mol beträgt.

10. Zweischicht-Beschichtungssystem nach einem oder mehreren der vorhergehenden Ansprüche 1 bis 9, **dadurch gekennzeichnet, dass** der Anteil des hydroxyfunktionellen Bindemittels in der transparenten Klarlackzusammensetzung 1,5 bis 10 Gew.-%, bezogen auf den Festkörperanteil der transparenten Klarlackzusammensetzung, beträgt.

11. Zweischicht-Beschichtungssystem nach einem oder mehreren der vorhergehenden Ansprüche 1 bis 10, **dadurch gekennzeichnet, dass** die transparente Klarlackzusammensetzung eine nicht-wässrige Lackzusammensetzung ist, die mindestens eine radikalisch vernetzbare Komponente (KK), die ein oder mehrere Oligourethan(meth)acrylate und/oder ein oder mehrere Polyurethan(meth)acrylate enthält, umfasst.

12. Zweischicht-Beschichtungssystem nach Anspruch 11, **dadurch gekennzeichnet, dass** die radikalisch vernetzbare Komponente (KK)
(i) ein oder mehrere Oligo- und/oder ein oder mehrere Polyurethan(meth)acrylate und
(ii) im Mittel mehr als 1 ethylenisch ungesättigte Doppelbindung pro Molekül enthält,
(iii) ein zahlenmittleres Molekulargewicht von 1.000 bis 10.000 g/mol,
(iv) einen Doppelbindungsgehalt von 1,0 bis 5,0 mol Doppelbindungen pro 1.000 g reaktive Komponente (KK),
(v) im Mittel pro Molekül > 1 Verzweigungspunkt,
(vi) 5- 50 Gew.-%, jeweils bezogen auf das Gewicht der Komponente (KK), cyclische Strukturelemente und
(vii) mindestens ein aliphatisches Strukturelement mit mindestens 6 C-Atomen in der Kette aufweist, und weiterhin
(viii) Carbamat- und/oder Biuret- und/oder Allophanat- und/oder Harnstoff- und/oder Amidgruppen, vorzugsweise in einem durchschnittlichen Gehalt an Carbamat- und/oder Biuret- und/oder Allophanat- und/oder Harnstoff- und/oder Amidgruppen von mehr als 0 bis 2,0 mol pro 1000 g reaktive Komponente (KK), besonders bevorzugt von 0,1 bis 1,1 mol pro 1000 g und ganz besonders bevorzugt einen Gehalt von 0,2 bis 0,7 mol pro 1000 g reaktive Komponente (KK), enthält.

13. Verwendung eines Zweischicht-Beschichtungssystems nach einem oder mehreren der vorhergehenden Ansprüche 1 bis 12 zur Herstellung von beschichteten Materialien, insbesondere von Folien, Formteilen, Beschichtungen, Klebstoffen und Dichtungen, vorzugsweise zur Herstellung mehrschichtiger Lackierungen, insbesondere Decklackierungen, in der Automobilserien- und -reparaturlackierung und/oder zur Herstellung mehrfach beschichteter Folien.

14. Verfahren zur Herstellung eines mit dem Zweischicht-Beschichtungssystem gemäß einem der Ansprüche 1 bis 12 in der Fahrzeugserien- oder -reparaturlackierung beschichteten Substrats, **dadurch gekennzeichnet, dass** ein Substrat zunächst mit der pigmentierten Lackzusammensetzung und dann mit der transparenten Klarlackzusammensetzung beschichtet wird, vorzugsweise nach dem Naß-in-Naß-Verfahren.

15. Verfahren zur Herstellung einer mit dem Zweischicht-Beschichtungssystem gemäß einem der Ansprüche 1 bis 12 beschichteten Folie, **dadurch gekennzeichnet, dass** die Folie zunächst mit der pigmentierten Lackzusammensetzung und dann mit der transparenten Klarlackzusammensetzung beschichtet wird, oder dass die Folie zunächst mit der transparenten Klarlackzusammensetzung und dann mit der pigmentierten Lackzusammensetzung beschichtet wird, jeweils vorzugsweise nach dem Naß-in-Naß-Verfahren.

## Claims

1. Two-coat coating system for producing a two-coat coating, comprising
(A) a composition of a transparent radiation-curable or radiation-curable and thermally curable clearcoat material comprising at least one hydroxy-functional binder, and
(B) a pigmented coating composition,
**characterized in that** the pigmented coating composition comprises at least one blocked, watersoluble or water-dispersible isocyanate.

2. Two-coat coating system according to Claim 1, **characterized in that** the at least one isocyanate of the pigmented coating composition is an aliphatic isocyanate.

3. Two-coat coating system according to Claim 1 or 2, **characterized in that** the at least one isocyanate is a polymeric isocyanate, preferably an HDI or IPDI polyisocyanate with polyethylene or oligoethylene oxide groups.

4. Two-coat coating system according to one or more of preceding Claims 1 to 3, **characterized in that** the fraction of the at least one isocyanate as a proportion of the pigmented coating composition is 15% to 35% by weight, based on the solids fraction of the pigmented coating composition.

5. Two-coat coating system according to one or more of preceding Claims 1 to 4, **characterized in that** the at least one isocyanate is a noncrystalline blocked isocyanate which can be deblocked at temperatures of ≤ 150°C, preferably ≤ 130°C.

6. Two-coat coating system according to one or more of preceding Claims 1 to 5, **characterized in that** the pigmented coating composition comprises one or more solventborne or aqueous pigmented coating materials which comprise
(I) one or more solvents and/or water,
(II) one or more binders, preferably one or more polyurethane resins and/or acrylate resins,
(III) if desired, at least one crosslinking agent,
(IV) one or more pigments, and
(V) if desired, one or more typical auxiliaries and additives.

7. Two-coat coating system according to one or more of preceding Claims 1 to 6, **characterized in that** the system is composed of an aqueous pigmented coating composition and of a nonaqueous transparent clearcoat composition.

8. Two-coat coating system according to one or more of preceding Claims 1 to 7, **characterized in that** the hydroxyl-functional binder in the transparent clearcoat composition is an oligo- or polyhydroxy-functional binder, preferably having a hydroxyl number of 50 to 150, with at least one free-radically reactive group, preferably having a functionality in respect of the free-radically reactive group of 4.0 to 11.0 mol/kg.

9. Two-coat coating system according to one or more of preceding Claims 1 to 8, **characterized in that** the weight-average molecular weight of the hydroxyl-functional binder is 300 to 2000 g/mol.

10. Two-coat coating system according to one or more of preceding Claims 1 to 9, **characterized in that** the fraction of the hydroxyl-functional binder in the transparent clearcoat composition is 1.5% to 10% by weight, based on the solids fraction of the transparent clearcoat composition.

11. Two-coat coating system according to one or more of preceding Claims 1 to 10, **characterized in that** the transparent clearcoat composition is a nonaqueous coating composition which comprises at least one free-radically crosslinkable component (KK) which comprises one or more oligourethane (meth)acrylates and/or one or more polyurethane (meth)acrylates.

12. Two-coat coating system according to Claim 11, **characterized in that** the free-radically crosslinkable component (KK) comprises
(i) one or more oligourethane and/or one or more polyurethane (meth)acrylates and
(ii) on average more than one ethylenically unsaturated double bond per molecule,
(iii)has a number-average molecular weight of 1000 to 10 000 g/mol,
(iv) a double bond content of 1.0 to 5.0 mol of double bonds per 1000 g of reactive component (KK),
(v) on average > 1 branching point per molecule,
(vi) 5% - 50% by weight, based in each case on the weight of component (KK), of cyclic structural elements, and
(vii)at least one aliphatic structural element having at least 6 C atoms in the chain, and further comprises
(viii)carbamate and/or biuret and/or allophanate and/or urea and/or amide groups, preferably in an average carbamate and/or biuret and/or allophanate and/or urea and/or amide group content of more than 0 to 2.0 mol per 1000 g of reactive component (KK), more preferably of 0.1 to 1.1 mol per 1000 g, and very preferably of 0.2 to 0.7 mol per 1000 g of reactive component (KK).

13. Use of a two-coat coating system according to one or more of preceding Claims 1 to 12 to produce coated materials, more particularly films, moldings, coatings, adhesives, and seals, preferably to produce multicoat paint systems, more particularly topcoat systems, in automotive OEM finishing and automotive refinish and/or to produce multiply coated films.

14. Method of producing a substrate coated with the two-coat coating system according to any one of Claims 1 to 12 in automotive OEM finishing or automotive refinish, **characterized in that** a substrate is coated first with the pigmented coating composition and then with the transparent clearcoat composition, preferably by the wet-on-wet technique.

15. Method of producing a film coated with the two-coat coating system according to any one of Claims 1 to 12, **characterized in that** the film is coated first with the pigmented coating composition and then with the transparent clearcoat composition, or **in that** the film is coated first with the transparent clearcoat composition and then with the pigmented coating composition, preferably in each case by the wet-on-wet technique.

## Revendications

1. Système de revêtement à deux couches pour la production d'un revêtement à deux couches, contenant
(A) une composition d'une laque claire transparente, durcissable par des rayons ou durcissable par des rayons et thermodurcissable, comprenant au moins un liant à fonctionnalité hydroxy, et
(B) une composition de laque pigmentée,
**caractérisé en ce que** la composition de laque pigmentée comprend au moins un isocyanate bloqué, soluble ou dispersible dans l'eau.

2. Système de revêtement à deux couches selon la revendication 1, **caractérisé en ce que** ledit au moins un isocyanate de la composition de laque pigmentée est un isocyanate aliphatique.

3. Système de revêtement à deux couches selon la revendication 1 ou 2, **caractérisé en ce que** ledit au moins un isocyanate est un isocyanate polymère, de préférence un polyisocyanate HDI ou IPDI présentant des groupes poly(oxyde d'éthylène) ou oligo(oxyde d'éthylène).

4. Système de revêtement à deux couches selon l'une ou plusieurs des revendications précédentes 1 à 3, **caractérisé en ce que** la proportion dudit au moins un isocyanate dans la composition de laque pigmentée est de 15 à 35 % en poids, par rapport à la proportion de corps solides de la composition de laque pigmentée.

5. Système de revêtement à deux couches selon l'une ou plusieurs des revendications précédentes 1 à 4, **caractérisé en ce que** ledit au moins un isocyanate est un isocyanate bloqué non cristallin, qui peut être débloqué à des températures ≤ 150°C, de préférence ≤ 130°C.

6. Système de revêtement à deux couches selon l'une ou plusieurs des revendications précédentes 1 à 5, **caractérisé en ce que** la composition de laque pigmentée comprend un ou plusieurs agents de revêtement pigmentés solvantés ou aqueux, qui contiennent
(I) un ou plusieurs solvants et/ou de l'eau
(II) un ou plusieurs liants, de préférence une ou plusieurs résines de polyuréthane et/ou une ou plusieurs résines d'acrylate et
(III) le cas échéant au moins un réticulant,
(IV) un ou plusieurs pigments ainsi que
(V) le cas échéant un ou plusieurs adjuvants et additifs usuels.

7. Système de revêtement à deux couches selon l'une ou plusieurs des revendications précédentes 1 à 6, **caractérisé en ce que** le système est constitué d'une composition de laque pigmentée, aqueuse et d'une composition de laque claire transparente non aqueuse.

8. Système de revêtement à deux couches selon l'une ou plusieurs des revendications précédentes 1 à 7, **caractérisé en ce que** le liant à fonctionnalité hydroxy dans la composition de laque claire transparente est un liant à fonctionnalité oligohydroxy ou polyhydroxy, présentant de préférence un indice d'hydroxyle de 50 à 150, présentant au moins un groupe réactif par voie radicalaire, présentant de préférence une fonctionnalité en ce qui concerne les groupes réactifs par voie radicalaire de 4,0 à 11,0 moles/kg.

9. Système de revêtement à deux couches selon l'une ou plusieurs des revendications précédentes 1 à 8, **caractérisé en ce que** le poids moléculaire pondéral moyen du liant à fonctionnalité hydroxy est de 300 à 2000 g/mole.

10. Système de revêtement à deux couches selon l'une ou plusieurs des revendications précédentes 1 à 9, **caractérisé en ce que** la proportion du liant à fonctionnalité hydroxy dans la composition de laque claire transparente est de 1,5 à 10 % en poids, par rapport à la proportion de corps solides de la composition de laque claire transparente.

11. Système de revêtement à deux couches selon l'une ou plusieurs des revendications précédentes 1 à 10, **caractérisé en ce que** la composition de laque claire transparente est une composition de laque non aqueuse, qui comprend au moins un composant réticulable par voie radicalaire (KK), qui contient un ou plusieurs oligo-uréthane(méth)acrylates ou un ou plusieurs polyuréthane(méth)acrylates.

12. Système de revêtement à deux couches selon la revendication 11, **caractérisé en ce que** le composant (KK) réticulable par voie radicalaire
(i) contient un ou plusieurs oligo-uréthane-(méth)acrylates et/ou un ou plusieurs polyuréthane-(méth)acrylates et
(ii) présente en moyenne plus d'une double liaison éthyléniquement insaturée par molécule,
(iii) présente un poids moléculaire numérique moyen de 1000 à 10 000 g/mole,
(iv) présente une teneur en doubles liaisons de 1,0 à 5,0 moles de doubles liaisons par 1000 g de composant réactif (KK),
(v) présente en moyenne, par molécule, > 1 point de ramification,
(vi) présente 5-50% en poids, à chaque fois par rapport au poids du composant (KK), d'éléments de structure cycliques et
(vii) présente au moins un élément de structure aliphatique comprenant au moins 6 atomes de carbone dans la chaîne, et en outre
(viii) des groupes carbamate et/ou biuret et/ou allophanate et/ou urée et/ou amide, de préférence à une teneur moyenne en groupes carbamate et/ou biuret et/ou allophanate et/ou urée et/ou amide de plus de 0 à 2,0 moles par 1000 g de composant réactif (KK), de manière particulièrement préférée de 0,1 à 1,1 mole par 1000 g et de manière tout particulièrement préférée une teneur de 0,2 à 0,7 mole par 1000 g de composant réactif (KK).

13. Utilisation d'un système de revêtement à deux couches selon l'une ou plusieurs des revendications précédentes 1 à 12 pour la production de matériaux revêtus, en particulier de feuilles, de pièces moulées, de revêtements, d'adhésifs et de joints, de préférence pour la production de laquages à plusieurs couches, en particulier de laquages de recouvrement, dans le laquage en série et de réparation d'automobiles et/ou pour la production de feuilles revêtues par plusieurs couches.

14. Procédé pour la production d'un substrat revêtu par le système de revêtement à deux couches selon l'une quelconque des revendications 1 à 12 dans le laquage en série et de réparation de véhicules, **caractérisé en ce qu'**un substrat est d'abord revêtu par la composition de laque pigmentée, puis par la composition de laque claire transparente, de préférence selon le procédé humide-sur-humide.

15. Procédé pour la production d'une feuille revêtue par le système de revêtement à deux couches selon l'une quelconque des revendications 1 à 12, **caractérisé en ce que** la feuille est d'abord revêtue par la composition de laque pigmentée, puis par la composition de laque claire transparente ou **en ce que** la feuille est d'abord revêtue par la composition de laque claire transparente, puis par la composition de laque pigmentée, à chaque fois de préférence selon le procédé humide-sur-humide.
